(19) Europäisches Patentamt / European Patent Office / Office européen des brevets

(11) **EP 2 538 570 B1**

(12) **EUROPÄISCHE PATENTSCHRIFT**

(45) Veröffentlichungstag und Bekanntmachung des Hinweises auf die Patenterteilung:
**20.07.2016 Patentblatt 2016/29**

(51) Int Cl.:
***H04B 3/54*** *(2006.01)*

(21) Anmeldenummer: **12169703.1**

(22) Anmeldetag: **29.05.2012**

(54) **Vorrichtung und Verfahren zur Bewertung von Störspannungen bei Modems**

Device and method for evaluating interference voltages for modems

Procédé et dispositif d'évaluation des tensions parasites de modem

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2011 DE 102011105392**

(43) Veröffentlichungstag der Anmeldung:
**26.12.2012 Patentblatt 2012/52**

(73) Patentinhaber: **Devolo AG**
**52068 Aachen (DE)**

(72) Erfinder: **Hirsch, Prof. Dr. Holger**
**59199 Bönen (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**EP-A1- 2 157 704     WO-A2-03/040732**

• **ANDREAS SCHWAGER ET AL: "MIMO PLC: Theory, measurements and system setup", POWER LINE COMMUNICATIONS AND ITS APPLICATIONS (ISPLC), 2011 IEEE INTERNATIONAL SYMPOSIUM ON, IEEE, 3. April 2011 (2011-04-03), Seiten 48-53, XP031864650, DOI: 10.1109/ISPLC.2011.5764447 ISBN: 978-1-4244-7751-7**

EP 2 538 570 B1

**Beschreibung**

Der Gegenstand betrifft eine Vorrichtung und ein Verfahren zur Bewertung von Störspannungen bei Modems.

Auf dem Gebiet der Telekommunikation werden für die Übertragung von Daten neben speziell für die Datenübertragung ausgebildeten Datenleitungen und neben drahtlosen Datenübertragungsverfahren in vermehrten Maße die Leitungen des Stromversorgungsnetzes verwendet.

Die drahtgebundene Kommunikation über die Leitungen des Stromversorgungsnetzes wird als "Powerline" oder "Powerline Communication" (PLC) bezeichnet, wobei die zu übertragenden Daten unter Verwendung einer speziellen Modulation neben der üblichen 50 Hz oder 60 Hz Spannung auf die Stromleitungen des Stromversorgungsnetzes aufmoduliert werden. Zur Erhöhung der Datenraten während der PLC Kommunikation werden mittlerweile sogenannte "Multiple-Input Multiple-Ouput" (MIMO) Algorithmen verwendet, welche unter Verwendung des Schutzleiters des Stromversorgungsnetzes eine Übertragung über mehrere Kanäle ermöglichen.

Der für die Modulation verwendete Frequenzbereich kann beispielsweise im Bereich von 1,5 bis 30 MHz und somit im Hochfrequenzbereich liegen, der Frequenzbereich kann sich auch deutlich über die 30 MHz erstrecken. Es existieren diverse einschlägige Normenvorschläge, wie beispielsweise CISPR/I/89/CD oder CENELEC prEN 50561-1, Januar 2011, welche Grenzwerte für die Abstrahlung von Störstrahlung für PLC Modems vorschreiben. Zur Prüfung, ob ein PLC Modem diese Grenzwerte einhält, ist es notwendig, die während des Betrieb eines PLC Modems abgestrahlte elektromagnetische Strahlung zu messen.

Unter Annahme des beispielhaften Frequenzbereichs von 1,5 bis 30 MHz für die auf die Stromleitungen aufmodulierten Signale eines PLC Modems weisen die zugehörigen Wellenlängen Größen im Bereich zwischen ca. 10 m und 200 m auf. Eine direkte Messung der Störstrahlung in der Praxis weist den Nachteil auf, dass die erforderlichen Räumlichkeiten eine den auftretenden Wellenlängen angepasste Größe aufweisen müssen und solch eine Messung daher nur sehr aufwändig zu realisieren ist.

Die Anmeldung WO 03/040732 A2 offenbart eine Vorrichtung zur Überprüfung des Störstrahlungsverhaltens eines Modems zur Übertragung von Daten über ein Stromversorgungsnetz, umfassend: - einen Netzanschluss zur Zufuhr eines elektrischen Wechselstromes; - einen Anschluss, welcher mit einem Phasenleiter, einem Nullleiter und einem Schutzleiter des Netzanschlusses verbunden ist und der dazu eingerichtet ist, - ein Modem an den Phasenleiter, den Nullleiter und den Schutzleiter anzuschließen, wobei das Modem eingerichtet ist zur Einkopplung eines Signals in den Anschluss für eine Ausbildung einer Übertragung des ersten Signals über den Phasenleiter , den Nullleiter und den Schutzleiter; - mit dem Anschluss verbundene Koppelmittel, welche - ein asymmetrisches Impedanzstabilisierungsnetzwerk und einen Ausgang umfassen, wobei - das Impedanzstabilisierungsnetzwerk eingangsseitig derart mit dem Phasenleiter, dem Nullleiter und dem Schutzleiter verbunden ist, dass das erste Signal in das asymmetrische Impedanzstabilisierungsnetzwerk eingespeist wird, und - wobei das asymmetrische Impedanzstabilisierungsnetzwerk ausgangsseitig mit dem Ausgang der Koppelmittel verbunden ist. Die Anmeldung EP 2 157 704 A1 offenbart MIMO Powerline Vorrichtungen. Das Artikel von ANDREAS SCHWAGER ET AL: "MIMO PLC: Theory, measurements and system setup",POWER LINE COMMUNICATIONS AND ITS APPLICATIONS (ISPLC), 2011 IEEE INTERNATIONAL SYMPOSIUM ON, IEEE, 3. April 2011 (2011-04-03), Seiten 48-53, XP031864650, DOI: 10.1109/ISPLC.2011.5764447, ISBN: 978-1-4244-7751-7, offenbart auch MIMO Powerline Vorrichtungen.

Die eingangs erwähnten Normenvorschläge befassen sich jedoch nicht mit PLC Modems, die nach dem MIMO-Prinzip übertragen. Aus den zuvor aufgezeigten Nachteilen lag der Erfindung die Aufgabe zugrunde, eine mit einfachem Aufbau zu realisierende Vorrichtung und ein dementsprechendes Verfahren zur Bewertung von Störspannungen von MIMO Modems zur Verfügung zu stellen. Diese Aufgabe wird gemäß einem ersten Aspekt der Erfindung gegenständlich gelöst durch eine Vorrichtung laut Anspruch 1.

Diese Aufgabe wird gegenständlich durch ein Verfahren für die Vorrichtung gelöst, welches das Anschließen des Modems an den Anschluss und das Messen eines Ausgangssignals am Ausgang der Koppelmittel umfasst.

Die Vorrichtung umfasst einen Netzanschluss zur Zufuhr eines elektrischen Wechselstromes. Mit diesem Netzanschluss kann die Vorrichtung beispielsweise an ein 240V und/oder 120V Wechselstromnetz angeschlossen werden. Der Netzanschluss umfasst einen Phasenleiter, einen Nullleiterund einen Schutzleiter. Wird der Netzanschluss mit dem Wechselstromnetz verbunden, so ist der Phasenleiter mit einer stromleitenden Phase, der Nullleiter mit dem Nullleiter, und der Schutzleiter mit dem Schutzleiter des Wechselstromnetzes verbunden.

Die Vorrichtung umfasst ferner einen Anschluss, welcher mit dem Phasenleiter, dem Nullleiterund dem Schutzleiter des Netzanschlusses verbunden ist und der dazu eingerichtet ist, ein Modem an den Phasenleiter, den Nullleiter und den Schutzleiter anzuschließen. Der Anschluss kann hierzu beispielsweise Kontakte aufweisen, in welche sich ein Netzanschlussstecker des Modems einstecken lässt, oder der Anschluss kann beispielsweise eine andere Aufnahmeeinrichtung zur elektrischen Aufnahme eines Modems aufweisen. Der Anschluss kann beispielsweise eine Steckdose zur Aufnahme eines Netzanschlusssteckers sein, wobei jeder beliebige Steckdosentyp, welcher einen eingesteckten Stecker mit dem Phasenleiter, dem Nullleiter und dem Schutzleiter geeignet ist.

Die Vorrichtung kann unter Verwendung des Impedanzstabilisierungsnetzwerkes zur Überprüfung des Störstrahlungsverhaltens eines MIMO-Modems verwendet werden, indem beispielsweise das zu testende Modem mit dem Anschluss der Vorrichtung verbunden und eingeschaltet wird. Das erste und das zweite MIMO-Signal des Modems werden dann entsprechend der Einkoppelvariante des Modems in den Phasenleiter, den Nullleiter und den Schutzleiter eingekoppelt und in den Eingang der Koppelmittel und somit in das asymmetrische Impedanzstabilisierungsnetzwerk eingespeist. Der Ausgang der Impedanzstabilisierungsnetzwerks ist mit dem Ausgang der Koppelmittel verbunden, so dass beispielsweise am Ausgang der Koppelmittel mit einem geeigneten Messgerät das Ausgangssignals des Impedanzstabilisierungsnetzwerks gemessen werden kann, welches ein Maß für die abgestrahlte Störleistung des getesteten MIMO-Modems in Bezug auf das verwendete asymmetrische Impedanzstabilisierungsnetzwerk darstellt. Beispielsweise kann am Ausgang der Koppelmittel das Leistungsdichtespektrum über einen vorgegebenen Frequenzbereich gemessen werden. Dieser Frequenzbereich kann beispielsweise zwischen 1,5 MHz und 30 MHz liegen, der Frequenzbereich kann jedoch auch hiervon abweichende Werte annehmen.

Das Impedanzstabilisierungsnetzwerk stellt ein asymmetrisches Impedanzstabilisierungsnetzwerk dar. Asymmetrisch bedeutet in diesem Zusammenhang, dass das Impedanzstabilisierungsnetzwerk eingangsseitig für den MIMO-Übertragungskanal, welcher dem eingespeisten ersten Signal, zugeordnet ist und/oder dem MIMO-Übertragungskanal, welcher dem eingespeisten zweiten Signal zugeordnet ist, eine asymmetrische Impedanz darstellt. Durch diese Asymmetrie des Impedanzstabilisierungsnetzwerkes kann die echte Asymmetrie der Stromversorgungsleitungen in Bezug auf die MIMO-Übertragung nachgebildet werden.

Ferner kann das Impedanzstabilisierungsnetzwerk einen Masseanschluss aufweisen, der beispielsweise an eine Erdung angeschlossen sein kann. Die Erdung kann beispielsweise durch eine elektrisch leitende Platte ausgebildet werden, wie beispielsweise eine Kupferplatte, über der das Impdedanzstabilisierungsnetzwerk angeordnet sein kann. Die Platte kann beispielsweise Flache aufweisen, die mindestens eine quadratische Grundfläche von 1m x 1m aufweist. Der Masseanschluss kann beispielsweise einen Kupferpfalz darstellen.

Somit kann mit der Vorrichtung das Störstrahlungsverhalten eines MIMO-Modems auf einfache Art und Weise ermittelt werden.

Gemäß einem vorteilhaften Ausführungsbeispiel wird vorgeschlagen, dass das asymmetrische Impedanzstabilisierungsnetzwerk derart eingerichtet ist, dass der eingangsseitige LCL-Wert des Impedanzstabilisierungsnetzwerkes sowohl für das erste Signal als auch für das zweite Signal zwischen 6 dB und 40 dB liegt.

Ein Maß für die Asymmetrie eines Impedanzstabilisierungsnetzwerkes stellt der sogenannte Longitudinal Conversion Loss (LCL) Wert dar, welcher gemäß ITU Recommendation G.117, 02/96, Absatz 4.1.3 spezifiziert ist. Der LCL-Wert beschreibt, in welchem Maß ein differentielles Gegentaktsignal, welches über die Übertragungsleitungen des Stromversorgungsnetzes übertragen wird, entlang dieser Übertragungsleitungen in ein Gleichtaktsignal umgewandelt wird.

Das Impedanzstabilisierungsnetzwerk ist derart eingerichtet, dass der eingangsseitige LCL-Wert des Impedanzstabilisierungsnetzwerkes sowohl für das erste Signal als auch für das zweite Signal zwischen 6 dB und 40 dB liegt. Der eingangsseitige LCL-Wert des Impedanzstabilisierungsnetzwerks kann beispielsweise für das erste Signal und/oder für das zweite Signal einen Wert zwischen 24dB und 31dB aufweisen, wie beispielsweise 24dB, 30dB, 30,1 30,4dB, 30,5dB oder 31dB aufweisen. Der LCL-Wert kann jedoch auch hiervon abweichende Werte annehmen.

Somit kann über das Impedanzstabilisierungsnetzwerk die Asymmetrie von Stromversorgungsleitungen in Bezug auf die Übertragung von MIMO-Signalen nachgebildet werden.

Gemäß einem vorteilhaften Ausführungsbeispiel wird vorgeschlagen, dass die Einkopplung des Modems in den Anschluss durch eine Einkopplung des ersten Signals zwischen zwei verschiedenen Leitern aus dem Phasenleiter, dem Nullleiter und dem Schutzleiter erfolgt und durch eine Einkopplung des zweiten Signals zwischen zwei verschiedenen Leitern aus dem Phasenleiter, dem Nullleiter und dem Schutzleiter erfolgt.

Die zwei verschiedenen Leiter für die Einkopplung des ersten Signals unterscheiden von den zwei verschiedenen Leitern für die Einkopplung des zweiten Signals in einem Leiter. Beispielsweise kann die Einkopplung des ersten Signals zwischen dem Phasenleiter und dem Schutzleiter und die Einkopplung des zweiten Signals zwischen dem Nullleiter und dem Schutzleiter erfolgen, es können aber auch beliebige andere Einkoppelvarianten ausgewählt werden.

Gemäß einem vorteilhaften Ausführungsbeispiel wird vorgeschlagen, dass die Einkopplung des Modems in den Anschluss durch eine Einkopplung des ersten Signals zwischen zwei verschiedenen Leitern aus dem Phasenleiter, dem Nullleiter und dem Schutzleiter erfolgt und durch eine Einkopplung des zweiten Signals zwischen einem Potentialpunkt, welcher zwischen dem Potential eines ersten und eines zweiten Leiters aus dem Phasenleiter, dem Nullleiter und dem Schutzleiter liegt, und dem verbleibenden Leiter aus dem Phasenleiter, dem Nullleiter und dem Schutzleiter erfolgt.

Der verbleibende Leiter für die Einkopplung des zweiten Signals stellt derjenige Leiter aus Phasenleiter, Nullleiter und Schutzleiter dar, welcher nicht dem ersten und dem zweiten Leiter entspricht.

Beispielsweise kann das erste Signal zwischen dem Phasenleiter und dem Nullleiter eingekoppelt werden, wobei für die Einkopplung des zweiten Signals der erste Leiter der Phasenleiter und der zweite Leier der Nullleiter gewählt wird, so dass das zweite Signal zwischen einem Potentialpunkt, welcher zwischen dem Potential des Phasenleiters und dem Potential des Nullleiters liegt, und dem Schutzleiter, also dem verbleibenden Leiter, eingekoppelt wird. Es können aber auch beliebige andere Einkoppelvarianten ausgewählt werden.

Die Erfindung ist so ausgeführt, dass das Impedanzstabilisierungsnetzwerk einen ersten Widerstand, einen zweiten Widerstand und einen dritten Widerstand umfasst, welche in einer Sternstruktur in Bezug auf einen gemeinsamen Knotenpunkt angeordnet sind, wobei der erste Widerstand mit den Phasenleiter, der zweite Widerstand mit dem Nullleiter, der dritte Widerstand mit dem Schutzleiter verbunden ist und der gemeinsame Knotenpunkt mit dem Ausgang der Koppelmittel verbunden ist. Durch diese Sternschaltung, umfassend den ersten, zweiten und dritten Widerstand können sowohl das in den Eingang der Koppelmittel eingekoppelte erste Signal als auch das in den Eingang der Koppelmittel eingekoppelte zweite Signal der MIMO-Übertragung zusammengeführt und aus dem Impedanzstabilisierungsnetzwerk ausgekoppelt werden, so dass am Ausgang der Koppelmittel die vom ersten Signal und vom zweiten Signal verursachte Störspannung gemessen werden kann.

Die Dimensionierung des ersten Widerstandes, des zweiten Widerstandes und des dritten Widerstandes kann von der verwendeten Einkoppelvariante des ersten und zweiten MIMO-Signals abhängen.

Gemäß einem vorteilhaften Ausführungsbeispiel wird vorgeschlagen, dass das Impedanzstabilisierungsnetzwerk zumindest einen weiteren Widerstand umfasst, dessen Wert den eingangsseitigen LCL-Wert des Impedanzstabilisierungsnetzwerkes sowohl für das erste Signal als auch für das zweite Signal bestimmt.

Gemäß einem vorteilhaften Ausführungsbeispiel wird vorgeschlagen, dass der zumindest eine weitere Widerstand einen ersten weiteren Widerstand und einen zweiten weiteren Widerstand umfasst, wobei der erste weitere Widerstand das dem Phasenleiter zugewandte Ende des ersten Widerstands mit einer Masse verbindet, und wobei der zweite weitere Widerstand das dem Nullleiter zugewandte Ende des zweiten Widerstands mit der Masse verbindet.

Das Impedanzstabilisierungsnetzwerk kann beispielsweise zumindest einen weiteren ersten Widerstand und einen weiteren zweiten Widerstand umfassen, dessen Werte den eingangsseitigen LCL-Wert des Impedanzstabilisierungsnetzwerkes sowohl für das erste Signal als auch für das zweite Signal bestimmen.

Der erste weitere Widerstand kann beispielsweise das dem Phasenleiter zugewandte Ende des ersten Widerstands mit der Masse verbinden, und der zweite weitere Widerstand kann das dem Nullleiter zugewandte Ende des zweiten Widerstands mit der Masse verbinden. Über diesen weiteren ersten Widerstand und diesen weiteren zweiten Widerstand kann beispielsweise zusammen mit dem ersten, zweiten und dritten Widerstand die Unsymmetrie des Impedanzstabilisierungsnetzwerkes eingestellt werden.

Die Erfindung sieht vor, dass das Impedanzstabilisierungsnetzwerk einen vierten Widerstand umfasst, welcher den gemeinsamen Knotenpunkt mit dem Ausgang der Koppelmittel verbindet. Dieser vierte Widerstand dient zur Messsignalauskopplung und kann auch zur Einstellung der asymmetrischen Impedanz verwendet werden.

Die eingangs gestellte Aufgabe wird gemäß einem zweiten Aspekt der Erfindung gegenständlich gelöst durch eine Vorrichtung zur Überprüfung eines Modems zur Übertragung von Daten über ein Stromversorgungsnetz, umfassend: Einen Netzanschluss zur Zufuhr eines elektrischen Wechselstromes; einen Anschluss, welcher mit einem Phasenleiter, einem Nullleiter und einem Schutzleiter des Netzanschlusses verbunden ist und der dazu eingerichtet ist, ein Modem an den Phasenleiter, den Nullleiter und den Schutzleiter anzuschließen, wobei das Modem eingerichtet ist zur Einkopplung eines ersten Signals und eines zweiten Signals in den Anschluss für eine Ausbildung einer MIMO-Übertragung des ersten und zweiten Signals über den Phasenleiter, den Nullleiter und den Schutzleiter; mit dem Anschluss verbundene Konvertierungsmittel, welche transformatorische Mittel zur transformatorischen Auskopplung des ersten Signals und des zweiten Signals aus dem Phasenleiter, dem Nullleiter und dem Schutzleiter umfassen, und welche einen ersten Ausgang zur Ausgabe des ausgekoppelten ersten Signals und einen zweiten Ausgang zur Ausgabe des ausgekoppelten zweiten Signals umfassen; ein mit dem ersten Ausgang verbundenes erstes Koppelmittel, welches einen Messausgang zur Messung zumindest eines Signalanteils des ersten Signals und einen Kommunikationsanschluss zur Übertragung des ersten Signals umfasst; und ein mit dem zweiten Ausgang verbundenes zweites Koppelmittel, welches einen Messausgang zur Messung zumindest eines Signalanteils des zweiten Signals und einen Kommunikationsanschluss zur Übertragung des zweiten Signals umfasst.

Die bezüglich der Vorrichtung gemäß dem ersten Aspekt der Erfindung erläuterten Eigenschaften bezüglich des Netzanschlusses, des Anschlusses und des Modems gelten gleichermaßen für die Vorrichtung gemäß dem zweiten Aspekt der Erfindung.

Insbesondere gelten auch die in Bezug auf den ersten Aspekt der Erfindung erläuterten Ausführungen zu den verschiedenen Ein- und Auskoppelvarianten des ersten und des zweiten Signals gleichermaßen für die Vorrichtung gemäß dem zweiten Aspekt der Erfindung Ausführungsbeispiel und ein mit dem Anschluss der Vorrichtung verbundenes Modem.

Die Konvertierungsmittel sind derart eingerichtet, dass sie das von einem Modem in den Anschluss eingespeiste erste und zweite Signal einer MIMO-Übertragung, welches das erstes und zweite Signals gemäß einer vorgegeben Einkoppelvariante in den Phasenleiter, Nullleiter und den Schutzleiter einspeist, durch die transformatorischen Mittel aus dem Phasenleiter, dem Nullleiter und dem Schutzleiter auskoppelt und das ausgekoppelte erste bzw. zweite Signal am ersten Ausgang bzw. am zweiten Ausgang der Konvertierungsmittel ausgibt.

Die transformatorischen Mittel können gleichermaßen auch zur Einkopplung des erstes Signals über den ersten Ausgang und zur Einkopplung des zweiten Signals über den zweiten Ausgang in den Phasenleiter, den Nullleiter und den Schutzleiter eingerichtet sein.

Die Vorrichtung gemäß dem zweiten Aspekt der Erfindung umfasst ein mit dem ersten Ausgang der Konvertierungsmittel verbundenes erstes Koppelmittel, welches einen Messausgang zur Messung zumindest eines Signalanteils des ersten Signals und einen Kommunikationsanschluss zur Übertragung des ersten Signals aufweist. Der Signalanteil des ersten Signals kann beispielsweise vollständig dem über den Ausgang übertragenen ersten Signal entsprechen, oder beispielsweise einen Teil dieses ersten Signals betragen.

Der Kommunikationsanschluss der ersten Koppelmittel kann beispielsweise zur Ausbildung einer Übertragung des ersten Signals zu einem zweiten Modem verwendet werden, wobei diese Übertragung auch bidirektional erfolgen kann, d.h. über den Kommunikationsanschluss kann ein von dem zweiten Modem erzeugtes erstes Signal in die ersten Koppelmittel eingespeist und über die Konvertierungsmittel zu dem mit dem Anschluss verbundenen ersten Modem geleitet werden.

Der Messausgang der ersten Koppelmittel kann beispielsweise zur Messung einer spektralen Leistungsdichte des ersten Signals verwendet werden. Beispielsweise kann der Messausgang einen BNC-Anschluss aufweisen, an welchen ein entsprechendes Messgerät angeschlossen werden kann. Somit kann beispielsweise von der Übertragung des ersten Signals verursachte abgestrahlte Störung durch Messung der spektralen Leistungsdichte am Messausgang, beispielsweise für einen vorgegebenen Frequenzbereich, während der Kommunikation zwischen dem ersten und zweiten Modem ermittelt werden. Wenn keine Messung am Messausgang erfolgt, so kann der Messausgang mit einer geeigneten Abschlussimpedanz abgeschlossen werden.

Die Vorrichtung umfasst ferner ein mit dem zweiten Ausgang der Konvertierungsmittel verbundenes zweites Koppelmittel, welches einen Messausgang zur Messung einer Signalkomponente des zweiten Signals und einen Kommunikationsanschluss zur Übertragung des ersten Signals aufweist. Die zum ersten Koppelmittel getroffenen Ausführungen gelten analog für das zweite Koppelmittel.

So kann beispielsweise der Kommunikationsanschluss der ersten Koppelmittel und der Kommunikationsanschluss der zweiten Koppelmittel jeweils zur Kommunikation mit dem zweiten Modem verbunden sein, wobei das erste Signal der MIMO-Übertragung zwischen dem ersten und dem zweiten Modem über den Kommunikationsanschluss der ersten Koppelmittel übertragen wird und das zweite Signal der MIMO-Übertragung zwischen dem ersten und dem zweiten Modem über den Kommunikationsanschluss der zweiten Koppelmittel übertragen wird.

Gemäß einem vorteilhaften Ausführungsbeispiel wird vorgeschlagen, dass das erste und zweite Koppelmittel jeweils einen aus Impedanzen gebildeten Spannungsteiler umfassen, welcher eingangsseitig mit dem entsprechendem Ausgang der Konvertierungsmittel verbunden ist, und welcher dazu eingerichtet ist, das eingangsseitig empfangene Signal zwischen dem Messausgang und dem Anschluss zur Übertragung des ersten bzw. zweiten Signals aufzuteilen.

Die Impedanzen können beispielsweise Widerstände darstellen.

Somit kann ein Signalanteil des ersten bzw. zweiten Signals dem jeweiligen Messausgang der ersten bzw. zweiten Koppelmittel zugeführt werden, während ein anderer Signalanteil des ersten bzw. zweiten Signals dem jeweiligen Kommunikationsanschluss der ersten bzw. zweiten Koppelmittel zugeführt werden kann.

Darüberhinhaus kann der Spannungsteiler der ersten bzw. zweiten Koppelmittel eine Abschluss-Impedanz aus Sicht des Modems darstellen, welches mit dem Anschluss der Vorrichtung verbunden ist, und der Spannungsteiler kann beispielsweise auch eine Abschluss-Impedanz für ein weiteres Modem darstellen, welches mit dem Kommunikationsanschluss der ersten bzw. zweiten Koppelmittel verbunden ist.

Die Signalaufteilung des Spannungsteilers kann beispielsweise symmetrisch sein, so dass die gleiche Leistung zum Messausgang und zum Kommunikationsanschluss übertragen wird, die Signalaufteilung kann aber auch unsymmetrisch sein.

Der LCL-Wert des Eingangs des Spannungsteilers kann beispielsweise gleich oder größer als 55 dB sein, der LCL-Wert kann auch gegen unendlich gehen.

Gemäß einem vorteilhaften Ausführungsbeispiel wird vorgeschlagen, dass die Konvertierungsmittel einen ersten Transformator zur transformatorischen Auskopplung des ersten Signals und einen zweiten Transformator zur transformatorischen Auskopplung des zweiten Signals umfassen.

Beispielsweise können die Konvertierungsmittel einen ersten Transformator umfassen, dessen Primärwicklung mit dem ersten Ausgang zur Aus- oder Einkopplung des ersten Signals verbunden ist, und dessen Sekundärwicklung, je nach Einkoppelvariante des Modems, mit zwei verschiedenen Leitern aus dem Phasenleiter, dem Schutzleiter und dem Nullleiter, wie beispielsweise dem Phasenleiter und dem Nullleiter, verbunden ist.

Ferner können die Konvertierungsmittel einen zweiten Transformator umfassen, dessen Primärwicklung dem zweiten Ausgang zur Aus- oder Einkopplung des zweiten Signals verbunden ist, und dessen Sekundärwicklung einem Potentialpunkt, welcher zwischen dem Potential eines ersten und eines zweiten Leiters aus dem Phasenleiter, dem Nullleiter und dem Schutzleiter liegt, wie beispielsweise dem Potential zwischen dem Phasenleiter und dem Nulleiter, und dem verbleibenden Leiter aus dem Phasenleiter, dem Nullleiter und dem Schutzleiter, wie beispielsweise dem Schutzleiter, verbunden sein.

Beispielsweise können die Konvertierungsmittel einen anderen ersten Transformator umfassen, dessen Primärwicklung mit dem ersten Ausgang zur Aus- oder Einkopplung des ersten Signals verbunden ist, und dessen Sekundärwicklung, je nach Einkoppelvariante des Modems, mit zwei verschiedenen Leitern aus dem Phasenleiter, dem Schutzleiter und dem Nullleiter, wie beispielsweise dem Phasenleiter und dem Schutzleiter, verbunden ist.

Ferner können die Konvertierungsmittel einen anderen zweiten Transformator umfassen, dessen Primärwicklung mit dem ersten Ausgang zur Aus- oder Einkopplung des ersten Signals verbunden ist, und dessen Sekundärwicklung, je nach Einkoppelvariante des Modems, mit zwei verschiedenen Leitern aus dem Phasenleiter, dem Schutzleiter und dem Nullleiter, wie beispielsweise dem Nullleiter und dem Schutzleiter, verbunden ist.

Generell können diese transformatorischen Ein- und Auskopplungen entsprechend den bezüglich des ersten Aspekts der Erfindung genannten Koppelvarianten realisiert werden.

Gemäß einem vorteilhaften Ausführungsbeispiel wird vorgeschlagen, dass die Konvertierungsmittel einen dritten Ausgang zur Messung eines Gleichtaktsignals aufweisen.

Dieses Gleichtaktsignal kann das vom Modem, welches an den Anschluss angeschlossen ist, in den Phasenleiter, Nullleiter und Schutzleiter injizierte Gleichtaktsignal darstellen. Dieses vom angeschlossenen Modem injizierte Gleichtaktsignal kann beispielsweise durch eine schlechte Anpassung des Modems an das Wechselstromnetz verursacht werden. Zur Messung des injizierten Gleichtaktsignals kann ein geeigneter Messempfänger an den dritten Ausgang der Konvertierungsmittel angeschlossen werden. Soll keine Messung des injizierten Gleichtaktsignals vorgenommen werden, so kann der dritte Ausgang mit einer geeigneten Impedanz abgeschlossen werden.

Gemäß einem vorteilhaften Ausführungsbeispiel wird vorgeschlagen, dass die Vorrichtung einen mit dem Phasenleiter, Nullleiter und dem Schutzleiter verbundenen Eingang zur Einspeisung eines Gleichtaktsignals umfasst.

Gemäß einem vorteilhaften Ausführungsbeispiel wird vorgeschlagen, dass die Vorrichtung eine Drossel umfasst, welche mit dem Eingang zur Einspeisung eines Gleichtaktsignals verbunden ist und welche derart angeordnet ist, dass ein am Eingang angelegtes Gleichtaktsignal jeweils in den Phasenleiter, in den Nullleiter und in den Schutzleiter eingespeist wird.

Die Vorrichtung kann beispielsweise Gleichtakteinspeisemittel umfassen, welche ein Drossel umfassen, die mit dem Eingang zur Einspeisung eines Gleichtaktsignals verbunden ist, und welche derart angeordnet ist, dass ein am Eingang angelegtes Gleichtaktsignal jeweils in den Phasenleiter, in den Nullleiter und in den Schutzleiter eingespeist wird.

Die Gleichtakteinspeisemittel können ferner einen optionalen Schalter umfassen, welcher im geschlossenen Zustand die Anschlüsse des Eingangs zur Einspeisung eines Gleichtaktsignals kurzschließt und welcher im geöffneten Zustand diesen Eingang freigibt, so dass im geöffneten Zustand über den Eingang ein Gleichtaktsignal in den Phasenleiter, in den Nullleiter und in den Schutzleiter eingespeist werden kann.

Die eingangs gestellte Aufgabe wird gemäß dem zweiten Aspekt der Erfindung gegenständlich gelöst durch ein System, umfassend eine erste Vorrichtung, wie zuvor bezüglich des zweiten Aspekts der Erfindung erläutert, und ein erstes Modem, welches mit dem Anschluss der ersten Vorrichtung verbunden ist, und eine zweite Vorrichtung, welche folgendes umfasst: einen Netzanschluss zur Zufuhr eines elektrischen Wechselstromes; einen Anschluss, welcher mit einem Phasenleiter, einem Nullleiter und einem Schutzleiter des Netzanschlusses der zweiten Vorrichtung verbunden ist und der dazu eingerichtet ist, ein Modem an den Phasenleiter, den Nullleiter und den Schutzleiter anzuschließen, wobei das Modem eingerichtet ist zur Einkopplung eines ersten Signals und eines zweiten Signals in den Anschluss für eine Ausbildung einer MIMO-Übertragung des ersten und zweiten Signals über den Phasenleiter, den Nullleiter und den Schutzleiter; mit dem Anschluss der zweiten Vorrichtung verbundene Konvertierungsmittel, welche transformatorische Mittel zur transformatorischen Auskopplung des ersten Signals und des zweiten Signals aus dem Phasenleiter, dem Nullleiter und dem Schutzleiter umfassen, und welche einen ersten Ausgang zur Ausgabe des ausgekoppelten ersten Signals und einen zweiten Ausgang zur Ausgabe des ausgekoppelten zweiten Signals umfassen; ein mit dem ersten Ausgang verbundenes erstes Koppelmittel, welches einen Messausgang zur Messung zumindest eines Signalanteils des ersten Signals und einen Kommunikationsanschluss zur Übertragung des ersten Signals umfasst, ein mit dem zweiten Ausgang verbundenes zweites Koppelmittel, welches einen Messausgang zur Messung zumindest eines Signalanteils des zweiten Signals und einen Kommunikationsanschluss zur Übertragung des zweiten Signals umfasst; wobei das System des weiteren umfasst: ein zweites Modem, welches mit dem Anschluss der zweiten Vorrichtung verbunden ist, wobei der Kommunikationsanschluss des ersten Koppelmittels der ersten Vorrichtung mit dem Kommunikationsanschluss des ersten Koppelmittels der zweiten Vorrichtung verbunden ist, und der Kommunikationsanschluss des zweiten Koppelmittels der ersten Vorrichtung mit dem Kommunikationsanschluss des zweiten Koppelmittels der zweiten Vorrichtung verbunden ist.

Der Netzanschluss der zweiten Vorrichtung entspricht im wesentlichen dem Netzanschluss der ersten Vorrichtung, wie auch der Anschluss der zweiten Vorrichtung im wesentlichen dem Anschluss der ersten Vorrichtung entspricht. Ein zweites Modem ist mit dem Anschluss der zweiten Vorrichtung verbunden, beispielsweise durch Einstecken.

Diese Konvertierungsmittel der zweiten Vorrichtung können beispielsweise identisch zu den Konvertierungsmittel der ersten Vorrichtung ausgebildet sein. Der dritte Ausgang der Konvertierungsmittel der zweiten Vorrichtung ist beispielsweise optional.

Die ersten und zweiten Koppelmittel der zweiten Vorrichtung können beispielsweise auch identisch zu den ersten und zweiten Koppelmitteln der ersten Vorrichtung ausgebildet sein.

Der Kommunikationsanschluss der ersten Koppelmittel ist über eine Verbindung mit dem Kommunikationsanschluss der zweiten Koppelmittel verbunden, wobei die Verbindung beispielsweise optional ein Dämpfungsglied umfassen kann. Ferner ist der Kommunikationsanschluss der zweiten Koppelmittel über eine Verbindung mit dem Kommunikationsanschluss der zweiten Koppelmittel verbunden, wobei die Verbindung beispielsweise optional ein Dämpfungsglied umfassen kann.

Beispielsweise kann die zweite Vorrichtung auch exakt der ersten Vorrichtung entsprechen.

Somit kann in dem System das erste Modem mit dem zweiten Modem eine MIMO-Kommunikation, basierend auf der Übertragung des ersten und des zweiten Signals zwischen den ersten und zweiten Ausgängen der Konvertierungsmittel der ersten und zweiten Vorrichtung durchführen.

Gemäß einem vorteilhaften Ausführungsbeispiel wird vorgeschlagen, dass ein Dämpfungsglied zwischen dem Kommunikationsanschluss des ersten Koppelmittels der ersten Vorrichtung und dem Kommunikationsanschluss des ersten Koppelmittels der zweiten Vorrichtung platziert ist und/oder ein Dämpfungsglied zwischen dem Kommunikationsanschluss des zweiten Koppelmittels der ersten Vorrichtung und dem Kommunikationsanschluss des zweiten Koppelmittels der zweiten Vorrichtung platziert ist.

Die eingangs gestellte Aufgabe wird gemäß dem zweiten Aspekt der Erfindung gelöst durch ein Verfahren zur Überprüfung des ersten Modems in dem System, umfassend: Durchführen einer Kommunikation zwischen dem ersten Modem und dem zweiten Modem; Messen eines Ausgangssignals am Messausgang der ersten Koppelmittel der ersten Vorrichtung oder am Messausgang der zweiten Koppelmittel der ersten Vorrichtung.

Gleichzeitig kann beispielsweise der Messausgang der zweiten Koppelmittel bzw. der Messausgang der ersten Koppelmittel, an dem nicht gemessen wird, abgeschlossen sein. Somit lassen sich beispielsweise zuerst das vom ersten Signal verursachte spektrale Leistungsdichtespektrum am Messausgang der ersten Koppelmittel messen, während der Messausgang der zweiten Koppelmittel abgeschlossen ist, und anschließend lässt sich das vom zweiten Signal verursachte spektrale Leistungsdichtespektrum am Messausgang der zweiten Koppelmittel messen, während der Messausgang der ersten Koppelmittel abgeschlossen ist. Falls die ersten und zweiten Koppelmittel der zweiten Vorrichtung auch Messausgänge aufweisen, so werden diese ebenso während der Messung abgeschlossen. Der optionale Schalter der optionalen Gleichtakteinspeisemittel kann während dieser Messung geschlossen sein. Die optionalen Dämpfungsglieder und können während dieser Messung entfernt sein. Der optionale dritte Ausgang der Konvertierungsmittel der ersten oder zweiten Vorrichtung ist, falls vorhanden, abgeschlossen.

Die eingangs gestellte Aufgabe wird gemäß dem zweiten Aspekt der Erfindung gelöst durch ein Verfahren zur Überprüfung des ersten Modems in dem System, umfassend Durchführen einer Kommunikation zwischen dem ersten Modem und dem zweiten Modem; Vorgeben einer vordefinierten Dämpfung durch das Dämpfungsglied; Messen eines Ausgangssignals am Messausgang der ersten Koppelmittel der ersten Vorrichtung oder am Messausgang der zweiten Koppelmittel der ersten Vorrichtung.

Somit kann beispielsweise, analog zur Vorgehensweise beim zuvor erläuterten Verfahren, das spektrale Leistungsdichtespektrum für das erste und das zweite Signal an dem jeweiligen Messausgang der ersten bzw. zweiten Koppelmittel der ersten Vorrichtung gemessen werden, wobei die gemessenen Leistungsdichtespektren der vorgegebene Dämpfung zugeordnet sind. Beispielsweise kann so überprüft werden, ob die gemessenen Leistungsdichtespektren bei einer bestimmten Dämpfung die normativen Vorgaben erfüllen. So kann zum Beispiel geprüft werden, ob sich bei einer Variation der Dämpfung durch die Dämpfungsglieder die spektrale Leistungsdichte am Messausgang der ersten bzw. zweiten Koppelmittel der ersten Vorrichtung entsprechend einer normativen Vorgabe ändert.

Die eingangs gestellte Aufgabe wird gemäß dem zweiten Aspekt der Erfindung gelöst durch ein Verfahren zur Überprüfung des ersten Modems in dem System, umfassend: Durchführen einer Kommunikation zwischen dem ersten Modem und dem zweiten Modem; Einspeisen eines Gleichtaktsignals mit einer vordefinierten Trägerfrequenz in den Phasenleiter, Nullleiter und Schutzleiter über den Eingang zur Einspeisung eines Gleichtaktsignals der ersten Vorrichtung; Prüfen, ob das erste Modem einen oder mehrere Träger freischaltet.

Sämtliche Messausgänge der ersten und zweiten Koppelmittel der ersten Vorrichtung, falls vorhanden, der ersten und zweiten Koppelmittel zweiten Vorrichtung sind abgeschlossen. Der optionale Schalter der Gleichtakteinspeisemittelist während dieser Messung geöffnet. Der optionale dritte Ausgang der Konvertierungsmittel in der ersten bzw. zweiten Vorrichtung ist, falls vorhanden, abgeschlossen.

Das erste Modem kann ein Mehrträgerübertragungsverfahren verwenden, wie beispielsweise OFDM. Das eingespeiste Gleichtaktsignal kann einen vorbestimmten Signalpegel und eine vordefinierte Bandbreite im Frequenzbereich aufweisen. Somit kann mit dem Verfahren gemäß einer dritten Ausführungsform bei Einspeisen Gleichtaktsignals mit einer vordefinierten Trägerfrequenz, und/oder Signalpegel und/oder Bandbreite, beispielsweise je nach normativer Vorgabe, überprüft werden, ob das erste Modem das Gleichtaktsignal erkennt und durch Freischalten des/der Träger der entsprechenden Frequenzen reagiert.

Die eingangs gestellte Aufgabe wird gemäß dem zweiten Aspekt der Erfindung gelöst durch ein Verfahren zur Überprüfung des ersten Modems in dem System, umfassend: Durchführen einer Kommunikation zwischen dem ersten Modem und dem zweiten Modem, Einspeisen eines Gegentaktsignals in den Ausgang und/oder in den Ausgang der Konvertierungsmittel der ersten Vorrichtung, wobei das eingespeiste Gegentaktsignal einer vordefinierte Trägerfrequenz aufweist, und Prüfen, ob das erste Modem einen oder mehrere Träger abschaltet.

Beispielsweise kann das Gegentaktsignals in den Kommunikationsanschluss der ersten Koppelmittel der ersten Vorrichtung und/oder in den Kommunikationsanschluss der zweiten Koppelmittel der ersten Vorrichtung eingespeist werden, so dass das eingespeiste Gegentaktsignal über die ersten bzw. Koppelmittel der ersten Vorrichtung in den jeweiligen ersten bzw. zweiten Ausgang der Konvertierungsmittel der ersten Vorrichtung gespeist wird. Hierfür kann das System beispielsweise einen Powersplitter umfassen, welcher in die Verbindung zwischen den Kommunikationsanschlüssen und der ersten Koppelmittel der ersten und zweiten Vorrichtung und/oder in die Verbindung zwischen den Kommunikationsanschlüssen der zweiten Koppelmittel der ersten und zweiten Vorrichtung eingeschleift wird, und welcher einen Eingang zum Einspeisen des Gegentaktsignals aufweist.

Das eingespeiste Gegentaktsignal kann einen vorbestimmten Signalpegel und eine vordefinierte Bandbreite im Frequenzbereich aufweisen. Somit kann mit dem Verfahren gemäß einer dritten Ausführungsform bei Einspeisen Gegentaktsignals mit einer vordefinierten Trägerfrequenz, und/oder Signalpegel und/oder Bandbreite, beispielsweise je nach normativer Vorgabe, überprüft werden, ob das erste Modem das Gegentaktsignal erkennt und durch Freischalten des/der Träger der entsprechenden Frequenzen reagiert.

Sämtliche Messausgänge der ersten und zweiten Koppelmittel der ersten Vorrichtung und, falls vorhanden, der ersten und zweiten Koppelmittel der zweiten Vorrichtung sind abgeschlossen. Der optionale Schalter der optionalen Gleichtakteinspeisemittel ist, falls vorhanden, während dieser Messung geschlossen. Der optionale dritte Ausgang der Konvertierungsmittel der ersten oder zweiten Vorrichtung ist, falls vorhanden, abgeschlossen.

In den Figuren zeigen:

Fig. 1a    eine erste exemplarische Vorrichtung zur Einkopplung eines MIMO-Signals;

Fig. 1b    eine zweite exemplarische Vorrichtung zur Einkopplung eines MIMO-Signals;

Fig. 1c    eine dritte exemplarische Vorrichtung zur Einkopplung eines MIMO-Signals;

Fig. 1d    eine vierte exemplarische Vorrichtung zur Einkopplung eines MIMO-Signals;

Fig. 2a    eine exemplarische Vorrichtung gemäß einem ersten Ausführungsbeispiel;

Fig. 2b    eine exemplarische Anordnung zur Bestimmung des LCL-Wertes;

Fig. 3    ein exemplarisches Impedanzstabilisierungsnetzwerk gemäß einem weiteren Ausführungsbeispiel;

Fig. 4    eine exemplarische Vorrichtung gemäß einem zweiten Ausführungsbeispiel;

Fig. 5    ein exemplarisches Koppelmittel gemäß einem ersten Ausführungsbeispiel;

Fig. 6a    ein exemplarisches Konvertierungsmittel gemäß einem ersten Ausführungsbeispiel;

Fig. 6b    ein exemplarisches Konvertierungsmittel gemäß einem zweiten Ausführungsbeispiel;

Fig. 7    eine exemplarische Vorrichtung gemäß einem dritten Ausführungsbeispiel; und

Fig. 8    eine exemplarisches System gemäß einem Ausführungsbeispiel.

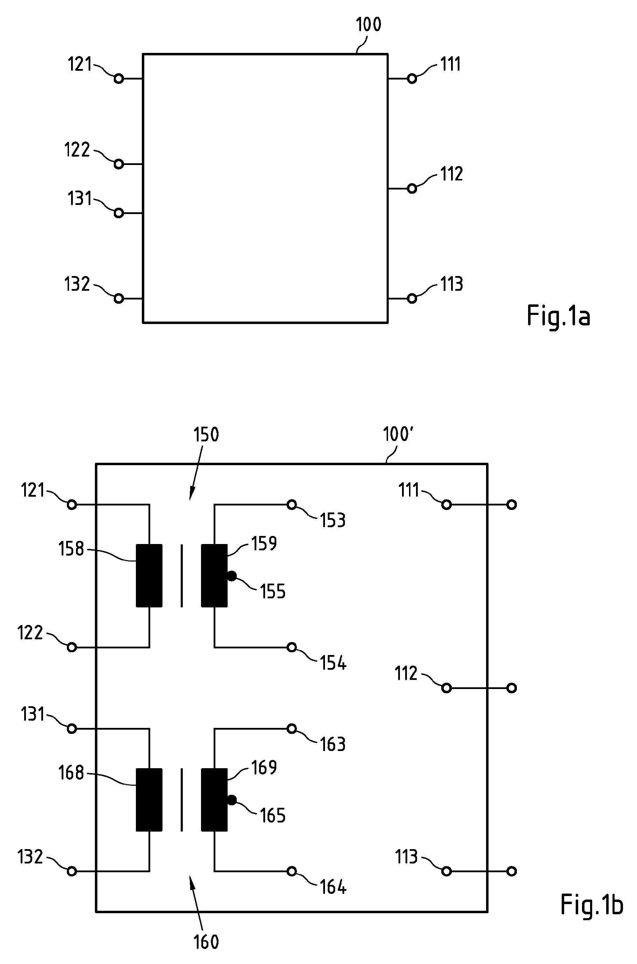

Figur 1a zeigt eine erste exemplarische Vorrichtung 100 zur Einkopplung eines Multiple-Input Multiple-Output (MIMO) Signals in einen Phasenleiter 111, einen Nullleiter 112 und einen Schutzleiter 113 eines elektrischen Stromversorgungsnetzes.

Die erste exemplarische Vorrichtung 100 ist dazu eingerichtet, ein zwischen den Anschlüssen 121 und 122 anliegendes erstes Signal und ein zwischen den Anschlüssen 131 und 132 anliegendes zweites Signal in den Phasenleiter 111, den Nullleiter 112 und den Schutzleiter 113 zur Ausbildung einer MIMO-Übertragung über das Stromversorgungsnetz einzukoppeln. Gleichermaßen kann die erste exemplarische Vorrichtung 100 zur Auskopplung des ersten Signals an den Anschlüssen 121 und 122 und zur Auskopplung des zweiten Signals an den Anschlüssen 131 und 132 verwendet werden, wenn ein entsprechendes MIMO-Signal am Phasenleiter 111, am Nullleiter 112 und am Schutzleiter 113 empfangen wird.

Die erste exemplarische Vorrichtung 100 kann beispielsweise in einem Powerline Communication (PLC) Modem integriert sein.

Die Ein- und Auskopplung des ersten bzw. zweiten Signals kann beispielsweise jeweils durch eine transformatorische Kopplung erfolgen. Unter dem Begriff transformatische Kopplung kann beispielsweise jede Kopplung verstanden werden, die auf einer elektromagnetischen Induktion beruht.

Die in Fig. 1b dargestellte zweite exemplarische Vorrichtung 100' verwendet eine solche transformatorische Kopplung zur Einkopplung eines MIMO-Signals, welche eine beispielhafte Ausgestaltung der ersten exemplarischen Vorrichtung 100 darstellt, realisiert ist.

Die Vorrichtung 100 umfasst einen ersten Transformator 150, dessen Primärwicklung 158 mit den Anschlüssen 121 und 122 zur Übertragung des ersten Signals verbunden ist und dessen eines Ende 153 der Sekundärwicklung 159 mit einem ersten Potentialpunkt und dessen anderes Ende 154 der Sekundärwicklung 159 mit einem zweiten Potentialpunkt in Bezug auf das Potential des Phasenleiters 111, des Nullleiters 112 und/oder des Schutzleiter 113 zur Ausbildung eines ersten MIMO-Kanals verbunden ist (Verbindung nicht in Fig. 1b dargestellt). Beispielsweise kann der erste Potentialpunkt ein Leiter aus Phasenleiter 111, Nullleiter 112 und Schutzleiter 113 sein und der zweite Potentialpunkt kann ein anderer Leiter aus Phasenleiter 111, Nullleiter 112 und Schutzleiter 113 sein. Der erste oder zweite Potentialpunkt kann allerdings auch ein Potentialpunkt sein, dessen Potential zwischen dem Potential eines ersten Leiter aus Phasenleiter 111, Nullleiter 112 und Schutzleiter 113 und eines zweiten Leiter aus Phasenleiter 111, Nullleiter 112 und Schutzleiter 113 liegt. Dieser Potentialpunkt, welcher zwischen dem Potential eines ersten Leiter aus Phasenleiter 111, Nullleiter 112 und Schutzleiter 113 und eines zweiten Leiter aus Phasenleiter 111, Nullleiter 112 und Schutzleiter 113 liegt, kann beispielsweise durch eine Anzapfung einer Spule, welche den ersten und zweiten Leiter verbindet, realisiert. Beispielsweise kann diese Spule die Sekundärwicklung 165 eines zweiten Transformators 160 der Vorrichtung 100' sein, wobei die Sekundärwicklung 169 eine optionale Anzapfung 165 umfasst. Die optionale Anzapfung 155 ist so zu verstehen, dass sie im wesentlichen exakt in der Mitte der Wicklung 159 liegen kann, sie kann allerdings auch von der exakten Wicklungsmitte verschoben sein, so dass die Mittelanzapfung 155 beliebig zwischen dem ersten Ende und dem zweiten Ende der Primärwicklung 159 liegen kann.

Die Primärwicklung des zweiten Transformators 160 ist mit den Anschlüssen 131 und 132 zur Übertragung des zweiten Signals verbunden. Analog zu den Ausführungen zum ersten Transformator 150 ist das eine Ende 163 der Primärwicklung mit einem ersten Potentialpunkt und das andere Ende 164 der Primärwicklung mit einem zweiten Potentialpunkt in Bezug auf das Potential des Phasenleiters 111, des Nullleiters 112 und/oder des Schutzleiter 113 zur Ausbildung eines zweiten MIMO-Kanals verbunden. Beispielsweise kann der erste Potentialpunkt ein Leiter aus Phasenleiter 111, Nullleiter 112 und Schutzleiter 113 sein und der zweite Potentialpunkt kann ein anderer Leiter aus Phasenleiter 111, Nullleiter 112 und Schutzleiter 113 sein. Der erste oder zweite Potentialpunkt kann allerdings auch ein Potentialpunkt sein, dessen Potential zwischen dem Potential eines ersten Leiter aus Phasenleiter 111, Nullleiter 112 und Schutzleiter 113 und eines zweiten Leiter aus Phasenleiter 111, Nullleiter 112 und Schutzleiter 113 liegt. Dieser Potentialpunkt, welcher zwischen dem Potential eines ersten Leiter aus Phasenleiter 111, Nullleiter 112 und Schutzleiter 113 und eines zweiten Leiter aus Phasenleiter 111, Nullleiter 112 und Schutzleiter 113 liegt, kann beispielsweise durch eine optionale Anzapfung 155 der Sekundärwicklung 159 des ersten Transformators 150 ausgebildet werden, wenn das eine Ende 153 der Sekundärwicklung 159 des ersten Transformators 150 mit dem ersten Leiter und das andere Ende 154 der Sekundärwicklung 159 des ersten Transformators 150 mit dem zweiten Leiter verbunden ist. Die Ausführungen zur optionalen Anzapfung 165 gelten gleichermaßen für die optionale Anzapfung 155.

Die zweite exemplarische Vorrichtung 100' ist daher dazu eingerichtet, das erste Signal zwischen dem ersten und zweiten Potentialpunkt der Sekundärseite des ersten Transformators 150 ein- oder auszukoppeln und das zweite Signal zwischen dem ersten und zweiten Potentialpunkt der Sekundärseite des zweiten Transformators 160 ein- oder auszukoppeln.

Somit können je nach Ausgestaltung der transformatorischen Ein- und Auskopplung durch die exemplarische Vorrichtung 100 unterschiedliche Kopplungen zur MIMO-Übertragung des ersten und zweiten Signals über den Phasenleiter 111, den Nullleiter 112 und den Schutzleiter 113 realisiert werden.

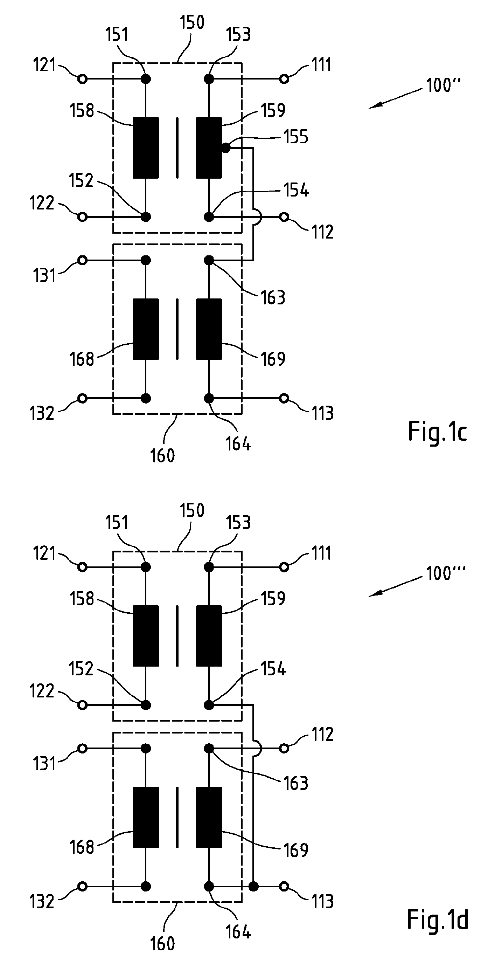

Fig. 1c zeigt eine dritte exemplarische Vorrichtung 100'' zur Einkopplung eines MIMO-Signals, welche eine beispielhafte Ausgestaltung der zweiten exemplarischen Vorrichtung 100' darstellt.

Die dritte exemplarische Vorrichtung 100'' umfasst den ersten Transformator 150, dessen Primärwicklung 158 mit den Anschlüssen 121 und 122 zur Ein- oder Auskopplung des ersten Signals verbunden ist, und dessen Sekundärwicklung 159 mit dem Phasenleiter 111 und dem Nullleiter 112 verbunden ist. Ferner umfasst die zweite exemplarische Vorrichtung 100' den zweiten Transformator 160, dessen Primärwicklung 168 mit den Anschlüssen 131 und 132 zur Ein- oder Auskopplung des zweiten Signals verbunden ist, und dessen Sekundärwicklung 169 mit dem Schutzleiter 113 und einem Potentialpunkt 155 verbunden ist, wobei dieser Potentialpunkt 155 zwischen dem Potential des Phasenleiters 111 und des Nullleiters 112 liegt. Wie in Fig. 1b beispielhaft gezeigt, kann dieser Potentialpunkt 155 durch eine Anzapfung 155 der Sekundärwicklung 159 des ersten Transformators 150 realisiert werden. Die Anzapfung 155 ist so zu verstehen, dass sie im wesentlichen exakt in der Mitte der Wicklung liegen kann, sie kann allerdings auch von der exakten Mitte verschoben sein, so dass die Mittelanzapfung 155 beliebig zwischen dem ersten Ende und dem zweiten Ende der Primärwicklung 168 liegen kann. Dieses Prinzip der Mittelanzapfung kann beispielsweise für alle Potentialpunkte, die zwischen einem ersten Leiter aus Phasenleiter 111, Nullleiter 112 und Schutzleiter 113 und einem zweiten Leiter aus Phasenleiter 111, Nullleiter 112 und Schutzleiter 113 liegt, verwendet werden.

Dieses in Fig. 1c beispielhaft dargestellte Prinzip der Verwendung eines Potentialpunktes 155, welcher zwischen dem Phasenleiter 111 und dem Nullleiter 112 liegt, kann für jede beliebige Kombination aus ersten Leiter aus Phasenleiter 111, Nullleiter 112 und Schutzleiter 113 und einem zweiten Leiter aus Phasenleiter 111, Nullleiter 112 und Schutzleiter 113, verwendet werden, indem beispielsweise eine Mittelanzapfung der Sekundärwicklung eines Transformators als Potentialpunkt dient, wobei die Sekundärwicklung mit dem ersten und zweiten Leiter verbunden ist.

Somit ist die dritte exemplarische Vorrichtung 100'' dazu eingerichtet, das erste Signal zwischen zwei verschiedenen Leitern aus dem Phasenleiter 111, dem Nulleiter 112 dem Schutzleiter 113, wie beispielsweise dem Phasenleiter 111 und dem Nullleiter 112 ein- oder auszukoppeln, und das zweite Signal zwischen einem Potentialpunkt 155, welcher zwischen dem Potential eines ersten und eines zweiten Leiters aus dem Phasenleiter 111, dem Nullleiter 112 und dem Schutzleiter 113 liegt, wie beispielsweise dem Potential zwischen dem Phasenleiter 111 und dem Nulleiter 112, und dem verbleibenden Leiter aus dem Phasenleiter 111, dem Nullleiter 112 und dem Schutzleiter 113, wie beispielsweise dem Schutzleiter 113, ein- oder auszukoppeln.

Fig. 1d zeigt eine vierte exemplarische Vorrichtung 100''' zur Einkopplung eines MIMO-Signals, welche eine beispielhafte Ausgestaltung der ersten exemplarischen Vorrichtung 100 darstellt.

Die vierte exemplarische Vorrichtung 100''' umfasst einen ersten Transformator 150, dessen Primärwicklung 158 mit den Anschlüssen 121 und 122 zur Ein- oder Auskopplung des ersten Signals verbunden ist, und dessen Sekundärwicklung 159 mit dem Phasenleiter 111 und dem Nullleiter 112 verbunden ist. Ferner umfasst die vierte exemplarische Vorrichtung 100''' einen zweiten Transformator 160, dessen Primärwicklung 168 mit den Anschlüssen 131 und 132 zur Ein- oder Auskopplung des zweiten Signals verbunden ist, und dessen Sekundärwicklung 169 mit dem Schutzleiter 113 und dem Nullleiter 112 verbunden ist.

Somit ist die vierte exemplarische Vorrichtung 100''' dazu eingerichtet, das erste Signal zwischen zwei verschiedenen Leitern aus dem Phasenleiter 111, dem Nulleiter 112 dem Schutzleiter 113, wie beispielsweise dem Phasenleiter 111 und dem Nullleiter 112 ein- oder auszukoppeln, und das zweite Signal zwischen zwei verschiedenen Leitern aus dem Phasenleiter 111, dem Nulleiter 112 dem Schutzleiter 113, wie beispielsweise dem Phasenleiter 111 und dem Nullleiter 112, ein- oder auszukoppeln, wobei sich die zwei verschiedenen Leiter bezüglich des zweiten Signals in einem Leiter von den zwei verschiedenen Leitern des ersten Signals unterscheiden.

Die vierte exemplarische Vorrichtung 100''' kann daher beispielsweise dazu eingerichtet sein, das erste Signal zwischen dem Phasenleiter 111 und dem Nullleiter 112 ein- oder auszukoppeln und das zweite Signal zwischen dem zwischen dem Nullleiter 112 und dem Schutzleiter 113 ein- oder auszukoppeln.

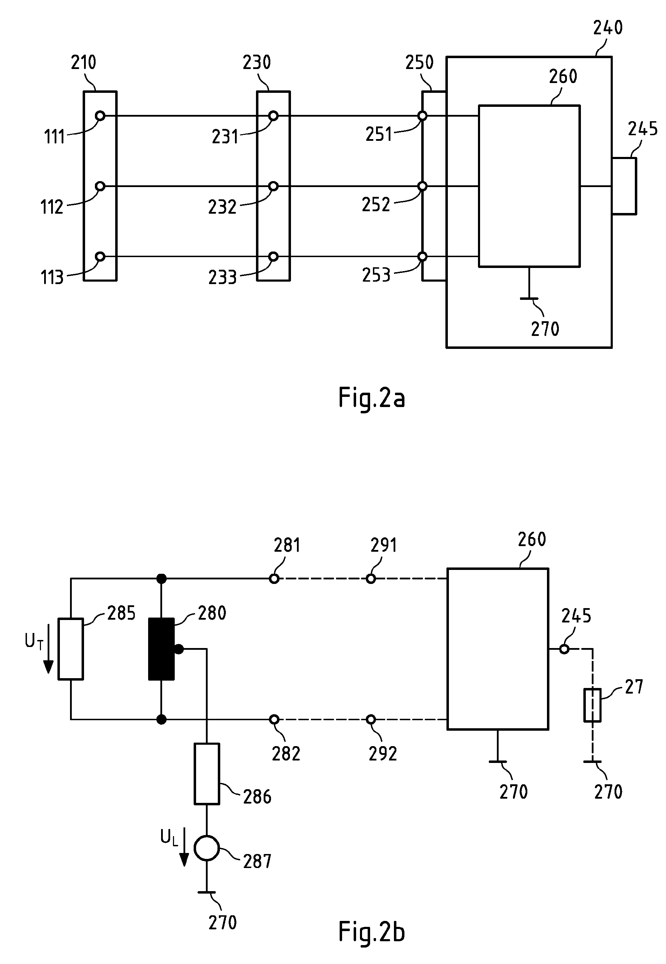

Fig. 2a zeigt eine exemplarische Vorrichtung 200 gemäß einem ersten Ausführungsbeispiel.

Diese Vorrichtung 200 ist eingerichtet zur Überprüfung des Störstrahlungsverhaltens eines Modems (nicht in Fig. 2a dargestellt) zur Übertragung von Daten über ein Stromversorgungsnetz.

Die Vorrichtung 200 umfasst einen Netzanschluss 210 zur Zufuhr eines elektrischen Wechselstromes. Mit diesem Netzanschluss 210 kann die Vorrichtung 200 beispielsweise an ein 240V und/oder 120V Wechselstromnetz angeschlossen werden. Der Netzanschluss 210 umfasst einen Phasenleiter 111, einen Nullleiter 112 und einen Schutzleiter 113. Wird der Netzanschluss 210 mit dem Wechselstromnetz verbunden, so ist der Phasenleiter 111 mit einer stromleitenden Phase, der Nullleiter 112 mit dem Nullleiter, und der Schutzleiter 113 mit dem Schutzleiter des Wechselstromnetzes verbunden.

Die Vorrichtung 200 umfasst ferner einen Anschluss 230, welcher mit dem Phasenleiter 111, dem Nullleiter 112 und dem Schutzleiter 113 des Netzanschlusses 210 verbunden ist und der dazu eingerichtet ist, ein Modem an den Phasenleiter 111, den Nullleiter 112 und den Schutzleiter 113 anzuschließen. Der Anschluss 230 kann hierzu beispielsweise Kontakte 231, 232 und 233 aufweisen, in welche sich ein Netzanschlussstecker des Modems einstecken lässt, oder der Anschluss 230 kann beispielsweise eine andere Aufnahmeeinrichtung zur elektrischen Aufnahme eines Modems aufweisen. Der Anschluss kann beispielsweise eine Steckdose zur Aufnahme eines Netzanschlusssteckers sein, wobei jeder beliebige Steckdosentyp, welcher einen eingesteckten Stecker mit dem Phasenleiter 111, dem Nullleiter 112 und dem Schutzleiter 113 geeignet ist.

Das Modem ist eingerichtet zur Einkopplung eines ersten Signals und eines zweiten Signals in den Anschluss 230 für eine Ausbildung einer MIMO-Übertragung des ersten und zweiten Signals über den Phasenleiter 111, den Nullleiter 112 und den Schutzleiter 113. Das Modem kann hierzu beispielsweise eine der in Bezug zu Figuren 1a, 1b, 1c und 1d erläuterten Vorrichtungen 100, 100', 100'' und 100''' zur Ein- und Auskopplung des ersten und zweiten Signals der MIMO-Übertragung verwenden.

Darüberhinaus umfasst die Vorrichtung 200 mit dem Anschluss 230 verbundene Koppelmittel 240, welche einen Eingang 250, ein asymmetrisches Impedanzstabilisierungsnetzwerk 260 und einen Ausgang 245 umfassen, wobei das asymmetrische Impedanzstabilisierungsnetzwerk 260 eingangsseitig über den Eingang 250 mit dem Phasenleiter 111, dem Nullleiter 112 und dem Schutzleiter 113 und ausgangsseitig mit dem Ausgang 245 der Koppelmittel 240 verbunden ist. Hierzu umfasst der Eingang 250 der Koppelmittel Potentialpunkte 251, 252, 253, die jeweils mit dem Phasenleiter 111, dem Nullleiter 112 und dem Schutzleiter 113 verbunden sind.

Das asymmetrische Impedanzstabilisierungsnetzwerk 260 stellt eine Nachbildung der Stromversorgungsleitungen, umfassend den Phasenleiter, den Nullleiter und den Schutzleiter, dar, und kann zur Messung der vom Modem verursachten leitungsgebundenen Störaussendung verwendet werden. Hierzu umfasst das Impedanzstabilisierungsnetz zumindest eine Mehrzahl von Impedanzen, wie beispielsweise Widerstände. Dieses Netzwerk aus Impedanzen ist zur Nachbildung der Stromversorgungsleitungen hinsichtlich der Störabstrahlung mit einer Masse 270 verbunden.

Das Impedanzstabilisierungsnetzwerk 260 stellt ein asymmetrisches Impedanzstabilisierungsnetzwerk 260 dar. Asymmetrisch bedeutet in diesem Zusammenhang, dass das Impedanzstabilisierungsnetzwerk 260 eingangsseitig für den MIMO-Übertragungskanal, welcher dem eingespeisten ersten Signal, zugeordnet ist und/oder dem MIMO-Übertragungskanal, welcher dem eingespeisten zweiten Signal zugeordnet ist, eine asymmetrische Impedanz darstellt. Durch diese Asymmetrie des Impedanzstabilisierungsnetzwerkes kann die echte Asymmetrie der Stromversorgungsleitungen in Bezug auf die MIMO-Übertragung nachgebildet werden.

Das asymmetrische Impedanzstabilisierungsnetzwerk 260 umfasst einen Ausgang, welcher zur Auskopplung des bzw. der in das Impedanzstabilisierungsnetzwerks 260 eingespeisten Signale dient. Dieser Ausgang ist mit dem Ausgang 245 der Koppelmittel 240 verbunden. Der Ausgang 245 der Koppelmittel dient zur Hochfrequenzmessung; beispielsweise kann der Ausgang 245 einen BNC-Anschluss zum Anschließen eines Hochfrequenzmessgeräts umfassen.

Ein Maß für die Asymmetrie eines Impedanzstabilisierungsnetzwerkes stellt beispielsweise der sogenannte Longitudinal Conversion Loss (LCL) Wert dar, welcher gemäß ITU Recommendation G.117, 02/96, Absatz 4.1.3 spezifiziert ist. Eine exemplarische Anordnung zur Bestimmung des LCL-Wertes ist in Fig. 2b dargestellt. Der LCL-Wert beschreibt, in welchem Maß ein differentielles Gegentaktsignal, welches über die Übertragungsleitungen des Stromversorgungsnetzes übertragen wird, entlang dieser Übertragungsleitungen in ein Gleichtaktsignal umgewandelt wird.

Die Kontakte 281 und 282 sind einem MIMO-Kanal eines Impedanzstabilisierungsnetzwerkes zugeordnet, wobei der MIMO-Kanal zur Übertragung des ersten oder zweiten Signals eingerichtet ist. Hierzu werden die Kontakte 281 und 282 jeweils mit dem ersten Potentialpunkt 291 und dem zweiten Potentialpunkt 292 des MIMO-Kanals, welcher entweder zur Übertragung des ersten oder des zweiten Signals ausgebildet wird, verbunden, wobei der erste Potentialpunkt 291 und der zweite Potentialpunkt 292 je nach Einkopplungsvariante wie zuvor in Bezug auf Fig. 1b erläutert ausgewählt werden kann.

Die über der Spannungsquelle 287 abfallende Spannung $U_L$ speist über die Impedanz 286, über die Mittelanzapfung der Spule 280 und über den ersten Potentialpunkt 291 und den zweiten Potentialpunkt 292 ein Gleichtaktsignal in das Impedanzstabilisierungsnetzwerk 260 ein (Verbindung durch gestrichelte Linien in Fig. 2b angedeutet). Der Ausgang 245 des Impedanzstabilisierungsnetzwerks 260 ist während der Messung abgeschlossen, beispielsweise durch Impedanz 275. Über der Impedanz 285 wird die Gegentaktspannung $U_T$ gemessen. Die Impedanz 285 kann den Wert Z annehmen, wohingegen die Impedanz 286 den Wert Z/4 annehmen kann. Beispielsweise kann Z=100Ω sein. Der LCL-Wert berechnet sich wie folgt:

$$\mathrm{LCL} \ = \ 20\log_{10}|U_L/\ U_T|\,\mathrm{dB}$$

Das Impedanzstabilisierungsnetzwerk 260 ist beispielsweise derart eingerichtet, dass der eingangsseitige LCL-Wert des Impedanzstabilisierungsnetzwerkes 260 sowohl für das erste Signal als auch für das zweite Signal zwischen 6 dB und 40 dB liegt. Eingangsseitig stellt den Eingang für den jeweiligen MIMO-Kanal zur Übertragung des ersten bzw. zweiten Signals dar, welcher dem entsprechenden ersten bzw. zweiten Potentialpunkt 291, 292 des ersten bzw. zweiten Signals zugeordnet ist.

Ist beispielsweise der erste bzw. zweite Potentialpunkt 291, 292 einem Leiter aus Phasenleiter 111, Nullleiter 112 und Schutzleiter 113 zugeordnet, so ist der erste bzw. zweite Potentialpunkt 291, 292 mit jeweiligen Leiter 251

(Phasenleiter), 252 (Nullleiter) oder 253 (Schutzleiter) des Impedanzstabilisierungsnetzwerkes 260 verbunden, d.h. Kontakt 281 ist beispielsweise mit dem entsprechenden Leiter aus Phasenleiter 251, Nullleiter 252 und Schutzleiter 253 verbunden, und /oder Kontakt 282 ist beispielsweise mit dem entsprechenden Leiter aus Phasenleiter 251, Nullleiter 252 und Schutzleiter 253 verbunden.

Stellt beispielsweise der erste bzw. zweite Potentialpunkt einen Potentialpunkt dar, dessen Potential zwischen dem Potential eines ersten Leiter aus Phasenleiter 111, Nullleiter 112 und Schutzleiter 113 und eines zweiten Leiter aus Phasenleiter 111, Nullleiter 112 und Schutzleiter 113 liegt, so ist der entsprechende Potentialpunkt 291 bzw. 292 mit einer Mittelanzapfung einer in Fig. 2b nicht dargestellten Spule verbunden, wobei das eine Ende dieser Spule mit dem entsprechenden ersten Leiter (Phasenleiter 251, Nullleiter 252, Schutzleiter 253) des Impedanzstabilisierungsnetzwerk 260 und das andere Ende der Spule mit dem entsprechenden zweiten Leiter (Phasenleiter 252, Nullleiter 252, Schutzleiter 253) des Impedanzstabilisierungsnetzwerkes 260 verbunden ist. Der jeweilige Kontakt 281 bzw. 282 kann dann mit der Mittelanzapfung der entsprechenden Spule verbunden sein.

Der eingangsseitige LCL-Wert des Impedanzstabilisierungsnetzwerks 260 kann beispielsweise für das erste Signal und/oder für das zweite Signal einen Wert zwischen 24dB und 31dB aufweisen, wie beispielsweise 24dB, 30dB, 30,1 30,4dB, 30,5dB oder 31dB aufweisen. Der LCL-Wert kann jedoch auch hiervon abweichende Werte annehmen.

Somit kann über das Impedanzstabilisierungsnetzwerk 260 die Asymmetrie von Stromversorgungsleitungen in Bezug auf die Übertragung von MIMO-Signalen nachgebildet werden.

Die in Fig. 2a dargestellte exemplarische Vorrichtung 200 gemäß dem ersten Ausführungsbeispiel kann daher unter Verwendung des Impedanzstabilisierungsnetzwerkes 260 zur Überprüfung des Störstrahlungsverhaltens eines MIMO-Modems (nicht in Fig. 2a dargestellt) verwendet werden, indem das zu testende Modem mit dem Anschluss 230 verbunden und eingeschaltet wird. Das erste und das zweite MIMO-Signal des Modems werden dann entsprechend der Einkoppelvariante des Modems in den Phasenleiter 111, den Nullleiter 112 und den Schutzleiter 113 eingekoppelt und in den Eingang 250 der Koppelmittel und somit in das asymmetrische Impedanzstabilisierungsnetzwerk 260 eingespeist. Der Ausgang der Impedanzstabilisierungsnetzwerks 260 ist mit dem Ausgang 245 der Koppelmittel 240 verbunden, so dass beispielsweise am Ausgang 245 der Koppelmittel 240 mit einem geeigneten Messgerät das Ausgangssignals des Impedanzstabilisierungsnetzwerks 260 gemessen werden kann, welches ein Maß für die abgestrahlte Störleistung des getesteten MIMO-Modems in Bezug auf das verwendete asymmetrische Impedanzstabilisierungsnetzwerk 260 darstellt.

Beispielsweise kann am Ausgang 245 das Leistungsdichtespektrum über einen vorgegebenen Frequenzbereich gemessen werden. Dieser Frequenzbereich kann beispielsweise zwischen 1,5 MHz und 30 MHz liegen, der Frequenzbereich kann jedoch auch hiervon abweichende Werte annehmen.

Ferner kann das Impedanzstabilisierungsnetzwerk 260 einen Masseanschluss aufweisen, der beispielsweise an eine Erdung angeschlossen sein kann. Die Erdung kann beispielsweise durch eine elektrisch leitende Platte Folie ausgebildet werden, wie beispielsweise eine Kupferplatte oder Kuperfolie, über der das Impdedanzstabilisierungsnetzwerk 260 angeordnet sein kann. Die Platte bzw. Folie kann beispielsweise eine Fläche aufweisen, die mindestens eine quadratische Grundfläche von 0,5m x 0,5 m, insbesondere mindestens 1m x 1m, aufweist. Der Masseanschluss kann beispielsweise einen Kupferpfalz darstellen.

Somit kann mit der Vorrichtung 200 das Störstrahlungsverhalten eines MIMO-Modems auf einfache Art und Weise ermittelt werden.

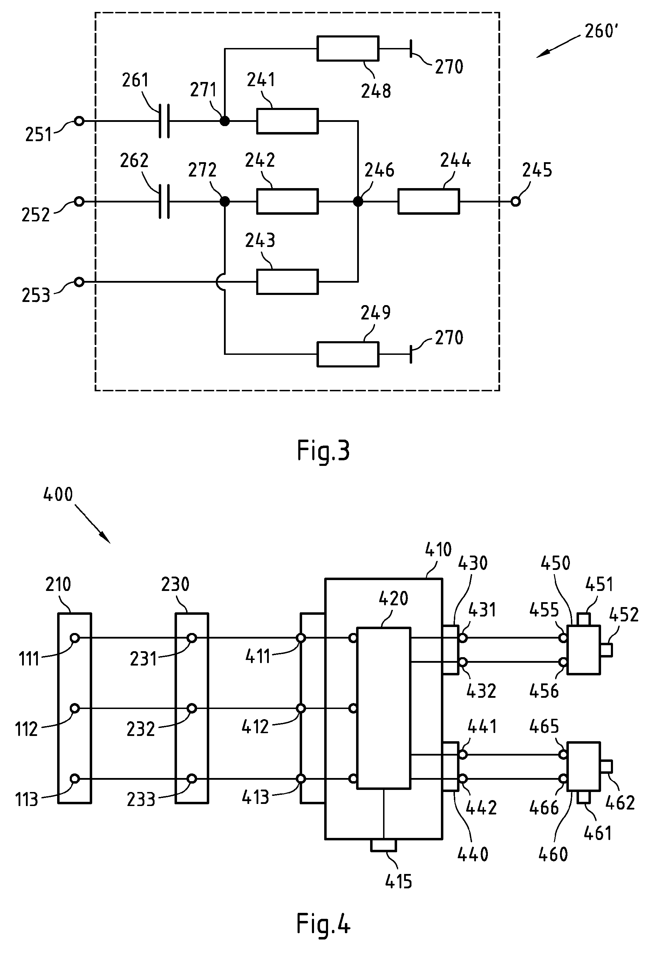

Figur 3 zeigt eine exemplarisches Impedanzstabilisierungsnetzwerk 240' gemäß einem weiteren Ausführungsbeispiel, welches für das in Figuren 2a und 2b verwendete Impedanzstabilisierungsnetzwerk 240 verwendet werden kann.

Das Impedanzstabilisierungsnetzwerk 260' umfasst einen ersten Widerstand 241, einen zweiten Widerstand 242 und einen dritten Widerstand 243, welche in einer Sternstruktur in Bezug auf einen gemeinsamen Knotenpunkt 246 angeordnet sind, wobei der erste Widerstand 241 mit den Phasenleiter 251, der zweite Widerstand 242 mit dem Nullleiter 252, der dritte Widerstand 243 mit dem Schutzleiter 253 verbunden ist und der gemeinsame Knotenpunkt 246 mit dem Ausgang der Koppelmittel 245 verbunden ist.

Durch diese Sternschaltung, umfassend die Widerstände 241, 242 und 243, werden sowohl das in den Eingang 250 eingekoppelte erste Signal als auch das in den Eingang 250 eingekoppelte zweite Signal der MIMO-Übertragung zusammengeführt und aus dem Impedanzstabilisierungsnetzwerk 240' ausgekoppelt werden, so dass am Ausgang 245 der Koppelmittel 240 die vom ersten Signal und vom zweiten Signal verursachte Störspannung gemessen werden kann.

Die Dimensionierung des ersten Widerstandes 241, des zweiten Widerstandes 242 und des dritten Widerstandes 243 hängt von der verwendeten Einkoppelvariante des ersten und zweiten Signals ab.

Für die in Fig. 1c dargestellte Einkoppelvariante können die Widerstände 241 und 242 beispielsweise jeweils einen Wert zwischen 40 und 60 Ω annehmen, wie beispielsweise etwa 50 Ω. Der dritte Widerstand 243 kann für die in Fig. 1c dargestellte Einkoppelvariante beispielsweise einen Wert annehmen, der halb so groß wie der Wert des ersten bzw. des zweiten Widerstands 241, 242 ist, wobei der erste und der zweiten Widerstand 241, 242 einen im wesentlichen gleich großen Wert aufweisen. Beispielsweise kann der dritte Widerstand 243 einen Wert zwischen 20 und 30 Ω annehmen, wie beispielsweise etwa 25 Ω.

Für die in Fig. 1d dargestellte Einkoppelvariante können der erste, zweite und dritte Widerstand 241, 242, 242 beispielsweise jeweils einen Wert zwischen 40 und 60 Ω annehmen, wie beispielsweise etwa 50 Ω.

Das Impedanzstabilisierungsnetzwerk 260' kann beispielsweise zumindest einen weiteren ersten Widerstand 248 und einen weiteren zweiten Widerstand 249 umfassen, dessen Werte den eingangsseitigen LCL-Wert des Impedanzstabilisierungsnetzwerkes sowohl für das erste Signal als auch für das zweite Signal bestimmen.

Der erste weitere Widerstand 248 verbindet das dem Phasenleiter 251 zugewandte Ende des ersten Widerstands 241 mit der Masse 270, und der zweite weitere Widerstand 249 verbindet das dem Nullleiter 252 zugewandte Ende des zweiten Widerstands 242 mit der Masse 270. Über diesen weiteren ersten Widerstand 248 und diesen weiteren zweiten Widerstand 249 kann zusammen mit dem ersten, zweiten und dritten Widerstand 241, 242, 243 die Unsymmetrie des Impedanzstabilisierungsnetzwerkes 260' eingestellt werden.

Für die in Fig. 1c dargestellte Einkoppelvariante kann der weitere erste Widerstand 248 beispielsweise einen Wert zwischen 500 und 600 Ω annehmen, wie beispielsweise etwa 560 Ω, und der weitere zweite Widerstand 249 kann beispielsweise einen Wert zwischen 2,5 und 2,9 kΩ annehmen, wie beispielsweise etwa 2,6 kΩ.

Für die in Fig. 1d dargestellte Einkoppelvariante können der weitere erste Widerstand 248 und der weitere zweite Widerstand 249 beispielsweise jeweils einen Wert zwischen 640 und 710 Ω annehmen, wie beispielsweise etwa 680 Ω.

Ferner kann das Impedanzstabilisierungsnetzwerk 260' einen vierten Widerstand 244 umfassen, welcher den gemeinsamen Knotenpunkt 246 mit dem Ausgang 245 der Koppelmittel 240 verbindet. Dieser vierte Widerstand 244 dient zur Messsignalauskopplung und kann auch zur Einstellung der asymmetrischen Impedanz verwendet werden.

Für die in Fig. 1c dargestellte Einkoppelvariante kann der vierte Widerstand 244 beispielsweise einen Wert zwischen 100 und 200 Ω annehmen, wie beispielsweise etwa 150 Ω. Für die in Fig. 1d dargestellte Einkoppelvariante kann der vierte Widerstand 244 beispielsweise einen Wert zwischen 200 und 300 Ω annehmen, wie beispielsweise etwa 200 Ω.

Darüberhinaus kann das Impedanzstabilisierungsnetzwerk Tiefpassmittel 261, 262 aufweisen, welche dazu eingerichtet sind, vom Phasenleiter und/oder Nullleiter in die Koppelmittel 140 eingespeisten Tieffrequenzströme zu dämpfen und/oder zu blockieren. Diese Tiefpassmittel können beispielsweise einen ersten Kondensator 261 umfassen, welcher das dem Phasenleiter 251 zugewandte Ende des ersten Widerstands 241, in Fig. 3 durch Bezugszeichen 271 dargestellt, mit dem Phasenleiter 251 des Eingangs 250 der Koppelmittel verbindet. Fernen können diese Tiefpassmittel beispielsweise einen zweiten Kondensator 262, umfassen, welcher das dem Nullleiter 252 zugewandte Ende des zweiten Widerstands 242, in Fig. 3 durch Bezugszeichen 272 dargestellt, mit dem Nullleiter 252 des Eingangs 250 der Koppelmittel verbindet. Diese Tiefpassmittel 261, 262 können insbesondere dazu eingerichtet sein, Ströme mit einer Frequenz unter 100 Hz zu filtern, so der Wechselstrom des Stromversorgungsnetz nicht in das Impedanzstabilisierungsnetzwerk 260' hineingespeist wird. Somit kann beispielsweise eine Zerstörung des

Impedanzstabilisierungsnetzwerkes 260' und/oder Störungen der Messung verhindert werden.

Beispielsweise kann sowohl der erste als auch der zweite Kondensator 261, 262 einen Wert im Bereich von 420 bis 520 nF aufweisen, wie beispielsweise in etwa 470 nF.

Das beispielhaft für die in Fig. 1c dargestellte Einkopplungsvariante dimensionierte Impedanzstabilisierungsnetzwerk 260' kann beispielsweise einen LCL-Wert in Höhe von etwa 30,6 dB, eine asymmetrische Impedanz in Höhe von etwa 145,5 Ω, und einen Transducer Faktor in Höhe von etwa 13,0 dB für die Einkopplung des ersten Signals aufweisen, und kann beispielsweise einen LCL-Wert in Höhe von etwa 30,5 dB, eine asymmetrische Impedanz in Höhe von etwa 145,5 Ω, und einen Transducer Faktor in Höhe von etwa 13,0 dB für die Einkopplung des ersten Signals aufweisen.

Das beispielhaft für die in Fig. 1d dargestellte Einkopplungsvariante dimensionierte Impedanzstabilisierungsnetzwerk 260' kann beispielsweise einen LCL-Wert in Höhe von etwa 30,1 dB, eine asymmetrische Impedanz in Höhe von etwa 149,4 Ω, und einen Transducer Faktor in Höhe von etwa 14,5 dB für die Einkopplung des ersten Signals aufweisen, und kann beispielsweise einen LCL-Wert in Höhe von etwa 30,1 dB, eine asymmetrische Impedanz in Höhe von etwa 149,4 Ω, und einen Transducer Faktor in Höhe von etwa 14,5 dB für die Einkopplung des ersten Signals aufweisen.

Das Impedanzstabilisierungsnetzwerk 260' kann jedoch auch für andere LCL-Werte, Asymmetrischee Impedanzen und Transducer Faktoren ausgelegt werden.

Fig. 4 zeigt eine exemplarische Vorrichtung 400 gemäß einem zweiten Ausführungsbeispiel.

Die Vorrichtung 400 gemäß einem zweiten Ausführungsbeispiel umfasst, ebenso wie die in Fig. 2a dargestellte Vorrichtung 200 gemäß dem ersten Ausführungsbeispiel, einen Netzanschluss 210 zur Zufuhr eines elektrischen Wechselstroms und einen Anschluss 230, welcher mit einem Phasenleiters 111, einem Nullleiter 112 und einem Schutzleiter des Netzanschlusses 210 verbunden ist, wobei der Anschluss 230 dazu eingerichtet ist, ein Modem an den Phasenleiter 111, den Nullleiter 112 und den Schutzleiter 113 anzuschließen, wobei das Modem eingerichtet zur Einkopplung eines ersten Signals und eines zweiten Signals in den Anschluss 230 für eine Ausbildung einer MIMO-Übertragung des ersten und zweiten Signals über den Phasenleiter 111, den Nullleiter 112 und den Schutzleiter 113.

Die zur Vorrichtung 200 gemäß dem ersten Ausführungsbeispiel erläuterten Eigenschaften bezüglich des Netzanschlusses 210, des Anschlusses 230 und des Modems gelten gleichermaßen für die Vorrichtung 400 gemäß dem zweiten Ausführungsbeispiel.

Insbesondere gelten auch die in Bezug auf die Figuren 1a bis 1d erläuterten Ausführungen zu den verschiedenen Ein- und Auskoppelvarianten des ersten und des zweiten Signals gleichermaßen für die Vorrichtung 400 gemäß dem zweiten Ausführungsbeispiel und ein mit dem Anschluss 230 verbundenes Modem.

Die Vorrichtung 400 umfasst des weiteren mit dem Anschluss 230 verbundene Konvertierungsmittel 410, welche transformatorische Mittel 420 zur transformatorischen Auskopplung des ersten Signals und des zweiten Signals aus dem Phasenleiter 111, dem Nullleiter 112 und dem Schutzleiter 113 umfassen, und welche einen ersten Ausgang 430 zur Ausgabe des ausgekoppelten ersten Signals und einen zweiten Ausgang 440 zur Ausgabe des ausgekoppelten zweiten Signals umfassen. Der Eingang der Koppelmittel 410 weist hierzu die Anschlüsse 411, 412, 413 auf, welche mit dem Phasenleiter 111, dem Nullleiter 112 und dem Schutzleiter 113 verbunden sind.

Die transformatorischen Mittel 420 können gleichermaßen auch zur Einkopplung des erstes Signals über den ersten Ausgang 430 und zur Einkopplung des zweiten Signals über den zweiten Ausgang 440 in den Phasenleiter 111, den Nullleiter 112 und den Schutzleiter 113 eingerichtet sein.

Die von den Konvertierungsmitteln 410 vorgenommene Einkopplung des ersten und des zweiten Signals kann durch eine der in Fig. 1a bis 1d dargestellten Koppelvariante realisiert werden, wobei der Anschluss 411 der Konvertierungsmittel 410 dem Anschluss 111 in den Fig. 1a bis 1d entspricht, der Anschluss 412 der Konvertierungsmittel 410 dem Anschluss 112 in den Fig. 1a bis 1d entspricht, der Anschluss 413 der Konvertierungsmittel 410 dem Anschluss 113 in den Fig. 1a bis 1d entspricht, und wobei die Anschlüsse 431 und 432 des ersten Ausgangs der Konvertierungsmittel 410 den Anschlüssen 121 bzw. 122 in den Fig. 1a bis 1d entsprechen, und wobei die Anschlüsse 441 und 442 des zweiten Ausgangs der Konvertierungsmittel 410 den Anschlüssen 131 bzw. 132 in den Fig. 1a bis 1d entsprechen.

Die Konvertierungsmittel 410 sind derart eingerichtet, dass sie das von einem Modem in den Anschluss 230 eingespeiste erste und zweite Signal einer MIMO-Übertragung, welches das erstes und zweite Signals gemäß einer vorgegeben Einkoppelvariante in den Phasenleiter 111, Nullleiter 112 und den Schutzleiter 113 einspeist, durch die transformatorischen Mittel 420 aus dem Phasenleiter 111, dem Nullleiter 112 und dem Schutzleiter 113 auskoppelt und das ausgekoppelte erste bzw. zweite Signal am ersten Ausgang 430 bzw. am zweiten Ausgang 440 der Konvertierungsmittel 410 ausgibt.

Die Vorrichtung 400 gemäß dem zweiten Ausführungsbeispiel umfasst ein mit dem ersten Ausgang 430 der Konvertierungsmittel 410 verbundenes erstes Koppelmittel 450, welches einen Messausgang 452 zur Messung zumindest eines Signalanteils des ersten Signals und einen Kommunikationsanschluss 451 zur Übertragung des ersten Signals aufweist. Der Signalanteil des ersten Signals kann beispielsweise vollständig dem über den Ausgang 430 übertragenen ersten Signal entsprechen, oder beispielsweise einen Teil dieses ersten Signals betragen.

Der Kommunikationsanschluss 451 der ersten Koppelmittel 450 kann beispielsweise zur Ausbildung einer Übertragung des ersten Signals zu einem zweiten Modem verwendet werden, wobei diese Übertragung auch bidirektional erfolgen kann, d.h. über den Kommunikationsanschluss 451 wird ein von dem zweiten Modem erzeugtes erstes Signal in die ersten Koppelmittel 450 eingespeist und über die Konvertierungsmittel 410 zu dem mit dem Anschluss 230 verbundenen ersten Modem geleitet.

Der Messausgang 452 der ersten Koppelmittel kann beispielsweise zur Messung einer spektralen Leistungsdichte des ersten Signals verwendet werden. Beispielsweise kann der Messausgang 452 einen BNC-Anschluss aufweisen, an welchen ein entsprechendes Messgerät angeschlossen werden kann. Somit kann beispielsweise von der Übertragung des ersten Signals verursachte abgestrahlte Störung durch Messung der spektralen Leistungsdichte am Messausgang 452, beispielsweise für einen vorgegebenen Frequenzbereich, während der Kommunikation zwischen dem ersten und zweiten Modem ermittelt werden. Wenn keine Messung am Messausgang 452 erfolgt, so kann der Messausgang 452 mit einer geeigneten Abschlussimpedanz abgeschlossen werden.

Die Vorrichtung 400 gemäß dem zweiten Ausführungsbeispiel umfasst ferner ein mit dem zweiten Ausgang 440 der Konvertierungsmittel 410 verbundenes zweites Koppelmittel 460, welches einen Messausgang 462 zur Messung einer Signalkomponente des zweiten Signals und einen Kommunikationsanschluss 461 zur Übertragung des ersten Signals aufweist. Die zum ersten Koppelmittel 450 getroffenen Ausführungen gelten analog für das zweite Koppelmittel 460.

So kann beispielsweise der Kommunikationsanschluss 451 der ersten Koppelmittel 450 und der Kommunikationsanschluss 461 der zweiten Koppelmittel 460 jeweils zur Kommunikation mit dem zweiten Modem verbunden sein, wobei das erste Signal der MIMO-Übertragung zwischen dem ersten und dem zweiten Modem über den Kommunikationsanschluss 451 der ersten Koppelmittel 450 übertragen wird und das zweite Signal der MIMO-Übertragung zwischen dem ersten und dem zweiten Modem über den Kommunikationsanschluss 461 der zweiten Koppelmittel 460 übertragen wird.

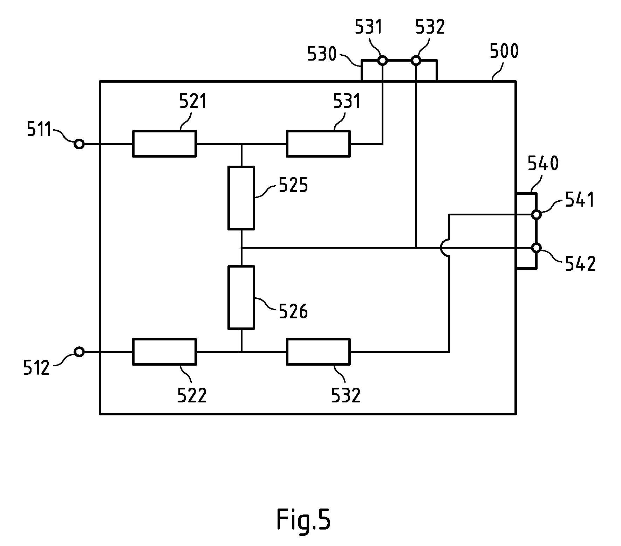

Fig. 5 zeigt ein exemplarisches Koppelmittel 500 gemäß einem ersten Ausführungsbeispiel. Dieses Koppelmittel 500 kann beispielsweise für das erste Koppelmittel 450 und/oder das zweite Koppelmittel 460 verwendet werden. Der Kommunikationsanschluss 530 der Koppelmittel 500 entspricht hierbei dem Kommunikationsanschluss 451 bzw. 461, der Messausgang 540 entspricht dem Messausgang 452 bzw. 462, und die eingangsseitigen Anschlüsse 511 und 512 entsprechen den eingangsseitigen Anschlüssen 455, 456 bzw. 465, 466 der ersten bzw. zweiten Koppelmittel 450, 460.

Das Koppelmittel 500 umfasst einen aus den Impedanzen 521, 522, 525, 526, 531, 532 gebildeten Spannungsteiler, welcher eingangsseitig über die Anschlüsse 511 und 512 mit dem entsprechenden Ausgang 430 oder 440 der Konvertierungsmittel 410 verbunden werden kann, und welcher dazu eingerichtet ist, dass eingangsseitig empfangene Signal, d.h. das erste oder zweite Signal, zwischen dem Messausgang 540 und dem Kommunikationsanschluss 530 aufzuteilen. Die Impedanzen 521, 522, 525, 526, 531, 532 können beispielsweise Widerstände darstellen.

Somit kann ein Signalanteil des ersten bzw. zweiten Signals dem Messausgang 540 zugeführt werden, während ein anderer Signalanteil des ersten bzw. zweiten Signals dem Kommunikationsanschluss 530 zugeführt werden kann.

Wie in Fig. 4 optional dargestellt, können die Konvertierungsmittel 410 einen dritten Ausgang 415 aufweisen, der zur Messung eines Gleichtaktsignals eingerichtet ist. Dieses Gleichtaktsignal kann das vom Modem, welches an den Anschluss 230 angeschlossen ist, in den Phasenleiter 111, Nullleiter 112 und Schutzleiter 113 injizierte Gleichtaktsignal darstellen. Dieses vom angeschlossenen Modem injizierte Gleichtaktsignal kann beispielsweise durch eine schlechte Anpassung des Modems an das Wechselstromnetz verursacht werden. Zur Messung des injizierten Gleichtaktsignals kann ein geeigneter Messempfänger an den dritten Ausgang 415 der Konvertierungsmittel 410 angeschlossen werden. Soll keine Messung des injizierten Gleichtaktsignals vorgenommen werden so kann der dritte Ausgang mit einer geeigneten Impedanz abgeschlossen werden.

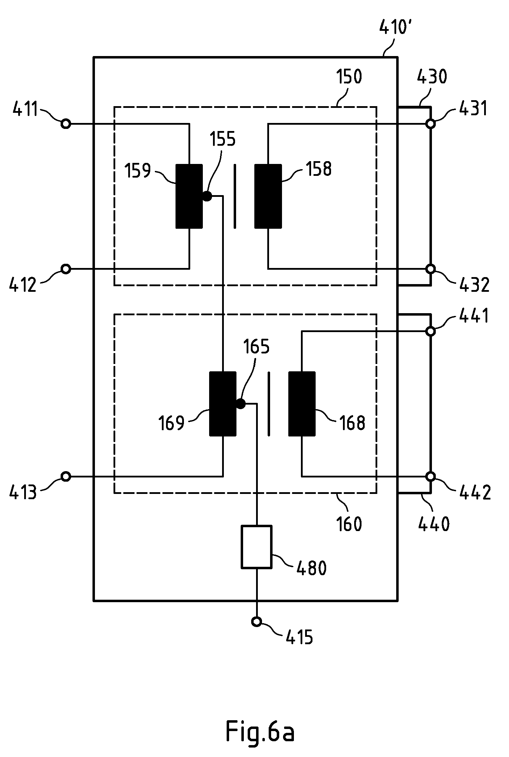

Fig. 6a zeigt ein exemplarisches Konvertierungsmittel 410' gemäß einem ersten Ausführungsbeispiel.

Dieses Konvertierungsmittel 410' gemäß einem ersten Ausführungsbeispiel basiert auf der in Fig. 1c gezeigten Ein- und Auskoppelvariante. Somit ist das Konvertierungsmittel 410' dazu eingerichtet, das erste Signal zwischen dem Phasenleiter 411 und dem Nullleiter 412 auszukoppeln (und/oder einzukoppeln) und am Ausgang 430 als ausgekoppeltes erstes Signal auszugeben, und das zweite Signal zwischen dem zwischen dem Phasenleiter 411 und dem Nullleiter 412 liegenden Potentialpunkt 155 und dem Schutzleiter 113 auszukoppeln (und/oder einzukoppeln) und am Ausgang 430 als ausgekoppeltes zweites Signal auszugeben.

Darüberhinaus umfasst die Wicklung 169 des zweiten Transformators 160 eine Mittelanzapfung 165, welche über den Widerstand 480 mit dem dritten Ausgang 415 des Konvertierungsmittel 410' verbunden ist. An diesem Ausgang 415 kann mit einem geeigneten Messgerät das vom Modem injizierte Gleichtaktsignal beispielsweise gegenüber Masse gemessen werden.

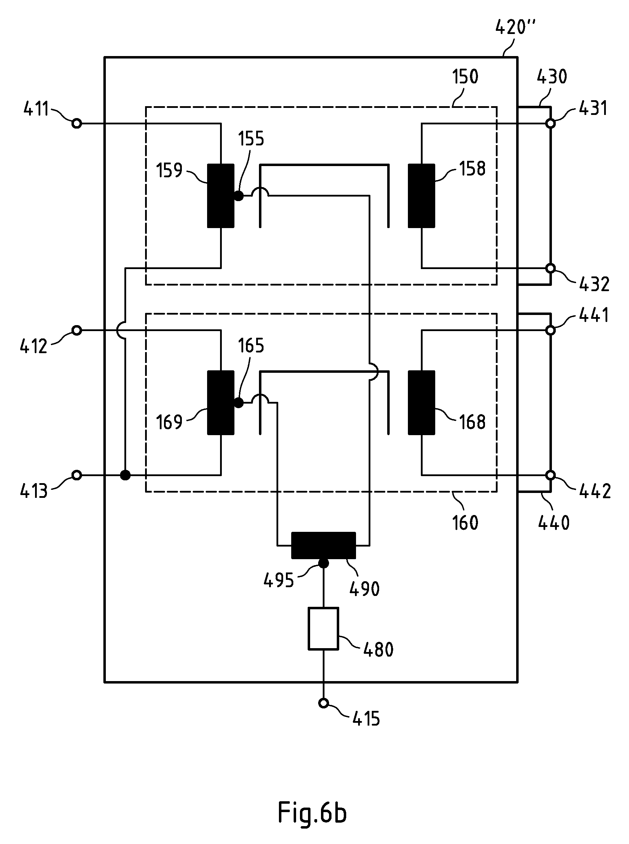

Fig. 6b zeigt ein exemplarisches Konvertierungsmittel 420'' gemäß einem zweiten Ausführungsbeispiel.

Dieses Konvertierungsmittel 410'' gemäß einem ersten Ausführungsbeispiel basiert auf der in Fig. 1d gezeigten Ein- und Auskoppelvariante. Somit ist das Konvertierungsmittel 410'' dazu eingerichtet, das erste Signal zwischen dem Phasenleiter 411 und dem Nullleiter 412 auszukoppeln (und/oder einzukoppel) und am ersten Ausgang 430 als ausgekoppeltes erstes Signal auszugeben, und das zweite Signal zwischen dem zwischen dem Nullleiter 412 und dem Schutzleiter 413 auszukoppeln (und/oder einzukoppeln) und am zweiten Ausgang 440 als ausgekoppeltes zweites Signal auszugeben.

Bezüglich der in Fig. 4a und Fig. 4b dargestellten Konvertierungsmittel 410' und 400'' können jedoch für die Anschlüsse 411, 412 und 413 auch andere Zuordnungen vorgenommen werden, wobei jeder der Anschlüsse 411, 412 und 413 jeweils einem verschiedenen Leiter aus Phasenleiter 111, Nullleiter 112 und Schutzleiter 413 zugeordnet wird. Die Konvertierungsmittel 410', 400'' können somit auf die spezielle Einkopplungsvariante des Modems eingerichtet sein. Die Wicklung 159 des ersten Transformators 150 umfasst eine erste Mittelanzapfung 155 und die Wicklung 160 des zweiten Transformators 160 umfasst eine Mittelanzapfung 165, welche mit jeweils einem Ende einer weiteren Spule 490 verbunden sind. Eine Mittelanzapfung 495 dieser Spule ist über einen Widerstand 480 mit dem dritten Ausgang 415 verbunden. An diesem Ausgang 415 kann mit einem geeigneten Messgerät das vom Modem injizierte Gleichtaktsignal beispielsweise gegenüber Masse gemessen werden.

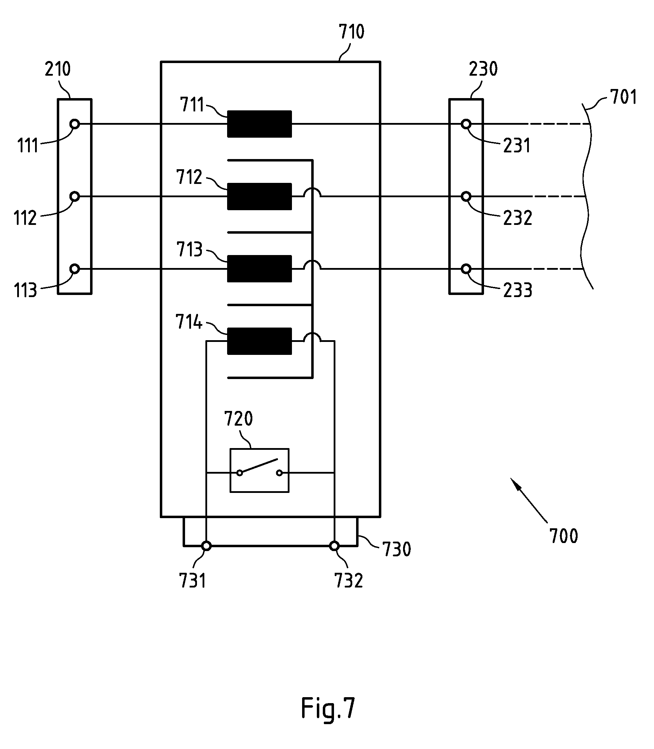

Fig. 7 zeigt auszugsweise eine exemplarische Vorrichtung 700 gemäß einem vierten Ausführungsbeispiel, welche auf der in Fig. 4 dargestellten exemplarischen Vorrichtung 400 gemäß einem dritten Ausführungsbeispiel basiert. Zur besseren Übersichtlichkeit sind nicht sämtliche Merkmale der exemplarischen Vorrichtung 400 gemäß dem dritten Ausführungsbeispiel in Fig. 7 gezeigt, wie durch die Bezugszeichen 701 angedeutet.

Die Vorrichtung 700 gemäß dem vierten Ausführungsbeispiel umfasst einen mit dem Phasenleiter 111, dem Nullleiter 112 und dem Schutzleiter 113 verbundenen Eingang 730 zur Einspeisung eines Gleichtaktsignals.

Die Vorrichtung 700 kann beispielsweise Gleichtakteinspeisemittel 710 umfassen, welche eine Drossel 711, 712, 713, 714 umfassen, die mit dem Eingang 730 zur Einspeisung eines Gleichtaktsignals verbunden ist, und welche derart angeordnet ist, dass ein am Eingang angelegtes Gleichtaktsignal jeweils in den Phasenleiter 111, in den Nullleiter 112 und in den Schutzleiter 113 eingespeist wird. Die Gleichtakteinspeisemittel 710 können ferner einen optionalen Schalter 720 umfassen, welcher im geschlossenen Zustand die Anschlüsse 731 und 732 des Eingangs 730 kurzschließt und welcher im geöffneten Zustand die Anschlüsse 731 und 732 nicht verbindet, so dass im geöffneten Zustand über den Eingang 730 ein Gleichtaktsignal in den Phasenleiter 111, in den Nullleiter 112 und in den Schutzleiter 113 eingespeist werden kann.

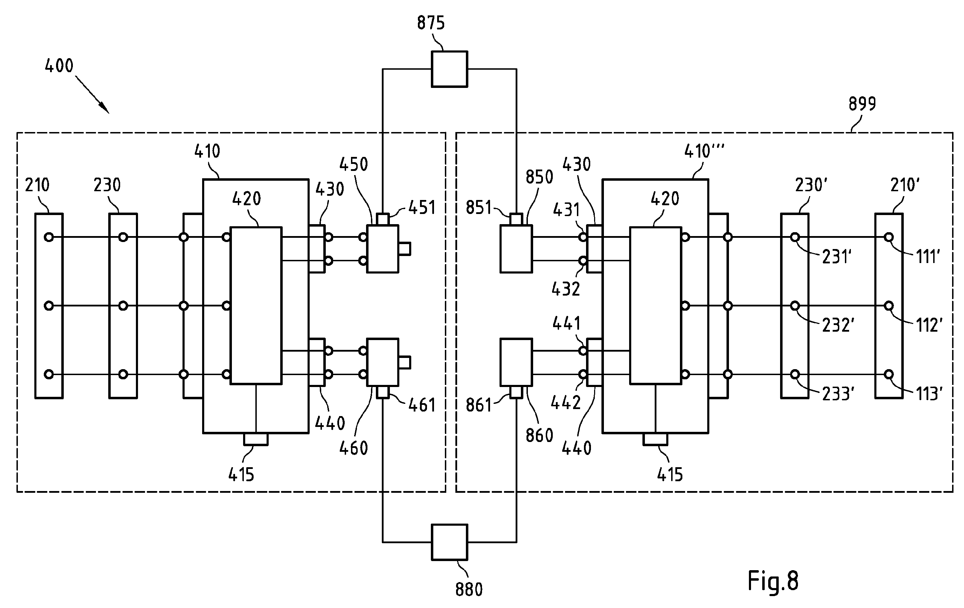

Fig. 8 zeigt ein exemplarisches System 800 gemäß einem Ausführungsbeispiel.

Dieses exemplarische System 800 umfasst die Vorrichtung gemäß dem dritten oder vierten Ausführungsbeispiel, wobei in Fig. 8 beispielhaft nur die Vorrichtung 400 gemäß dem dritten Ausführungsbeispiel gezeigt ist. Diese Vorrichtung sei nun als erste Vorrichtung bezeichnet. Ein erstes Modem (nicht in Fig. 8 dargestellt) ist mit dem Anschluss 230 verbunden, beispielsweise durch Einstecken.

Darüberhinaus umfasst das System 800 eine zweite Vorrichtung, welche einen Netzanschluss 210' zur Zufuhr eines elektrischen Wechselstromes umfasst. Dieser Netzanschluss 210' entspricht im wesentlichen dem Netzanschluss 210 der ersten Vorrichtung. Die zweite Vorrichtung umfasst ferner einen Anschluss 230', welcher mit dem Phasenleiter 111', dem Nullleiter 112', 113' des Netzanschlusses 210' verbunden ist. Dieser Anschluss 230' entspricht im wesentlichen dem Anschluss 230 der ersten Vorrichtung. Ein zweites Modem (nicht in Fig. 8 dargestellt) ist mit dem Anschluss der zweiten Vorrichtung verbunden, beispielsweise durch Einstecken.

Die zweite Vorrichtung umfasst mit dem Anschluss 230' verbundene Konvertierungsmittel 410''', welche transformatorische Mittel 420 zur transformatorischen Auskopplung des ersten Signals und des zweiten Signals aus dem Phasenleiter 111', dem Nullleiter 112' und dem Schutzleiter 113' umfassen, und welche einen ersten Ausgang 430 zur Ausgabe des ausgekoppelten ersten Signals und einen zweiten Ausgang 440 zur Ausgabe des ausgekoppelten zweiten Signals umfassen. Diese Konvertierungsmittel 410''' können beispielsweise identisch zu den Konvertierungsmittel 410 der ersten Vorrichtung ausgebildet sein. Der dritte Ausgang 415 der Konvertierungsmittel 410''' ist optional.

Darüberhinaus umfasst die zweite Vorrichtung ein mit dem ersten Ausgang 430 der Konvertierungsmittel 410''' verbundenes erstes Koppelmittel 850, welches einen Kommunikationsanschluss 851 zur Übertragung des ersten Signals aufweist, und ein mit dem zweiten Ausgang 430 der Konvertierungsmittel 410''' verbundenes zweites Koppelmittel 860, welches einen Kommunikationsanschluss 861 zur Übertragung des zweiten Signals aufweist. Die ersten und zweiten Koppelmittel 850 bzw. 860 können beispielsweise auch identisch zu den ersten und zweiten Koppelmitteln 450 bzw. 460 der ersten Vorrichtung ausgebildet sein.

Der Kommunikationsanschluss 851 der ersten Koppelmittel 850 ist über eine Verbindung mit dem Kommunikationsanschluss 451 der zweiten Koppelmittel 450 verbunden, wobei die Verbindung beispielsweise optional ein Dämpfungsglied 870 umfassen kann. Ferner ist der Kommunikationsanschluss 861 der zweiten Koppelmittel 860 über eine Verbindung mit dem Kommunikationsanschluss 461 der zweiten Koppelmittel 460 verbunden, wobei die Verbindung beispielsweise optional ein Dämpfungsglied 880 umfassen kann.

Beispielsweise kann die zweite Vorrichtung 899 auch exakt der ersten Vorrichtung entsprechen.

Somit kann in dem System 800 das erste Modem mit dem zweiten Modem eine MIMO-Kommunikation, basierend auf der Übertragung des ersten und des zweiten Signals zwischen den Ausgängen 430 und 440 der Konvertierungsmittel 400 und 400''', durchführen.

Ein exemplarisches Verfahren gemäß einer ersten Ausführungsform für das System 800 umfasst folgendes: Durchführen einer Kommunikation zwischen dem ersten Modem und dem zweiten Modem und Messen eines Ausgangssignals am Messausgang 452 der ersten Koppelmittel 450 der ersten Vorrichtung oder Messen eines Ausgangssignals am Messausgang 462 der zweiten Koppelmittel 460 der ersten Vorrichtung.

Gleichzeitig ist der Messausgang 462 der zweiten Koppelmittel bzw. der Messausgang 452 abgeschlossen. Somit lassen sich beispielsweise zuerst das vom ersten Signal verursachte spektrale Leistungsdichtespektrum am Messausgang 452 der ersten Koppelmittel 452 messen, während der Messausgang 462 der zweiten Koppelmittel abgeschlossen ist, und anschließend lässt sich das vom zweiten Signal verursachte spektrale Leistungsdichtespektrum am Messausgang 462 der zweiten Koppelmittel messen, während der Messausgang 452 der ersten Koppelmittel abgeschlossen ist. Falls die ersten und zweiten Koppelmittel 850 und 860 ebenfalls Messausgänge aufweisen, so werden diese ebenso während der Messung abgeschlossen. Der optionale Schalter 720 der optionalen Gleichtakteinspeisemittel 710 kann während dieser Messung geschlossen sein. Die optionalen Dämpfungsglieder 870 und 880 können während dieser Messung entfernt sein. Der optionale dritte Ausgang 415 der Konvertierungsmittel 410 ist, falls vorhanden, abgeschlossen.

Ein exemplarisches Verfahren gemäß einer zweiten Ausführungsform umfasst zusätzlich zu dem exemplarischen Verfahren gemäß der ersten Ausführungsform das Vorgeben einer vordefinierten Dämpfung durch die Dämpfungsglieder 870 und 880.

Somit kann beispielsweise, analog zur Vorgehensweise beim Verfahren gemäß einer ersten Ausführungsform erläutert, das spektrale Leistungsdichtespektrum für das erste und das zweite Signal an dem jeweiligen Messausgang 452 bzw. 462 gemessen werden, wobei die gemessenen Leistungsdichtespektren der vorgegebene Dämpfung zugeordnet sind. Beispielsweise kann so überprüft werden, ob die gemessenen Leistungsdichtespektren bei einer bestimmten Dämpfung die normativen Vorgaben erfüllen. So kann zum Beispiel geprüft werden, ob sich bei einer Variation der Dämpfung durch die Dämpfungsglieder 870 und 880 die spektrale Leistungsdichte am Messausgang 452 bzw. 462 entsprechend einer normativen Vorgabe ändert.

Ein exemplarisches Verfahren gemäß einer dritten Ausführungsform für das System 800 umfasst folgendes: Durchführen einer Kommunikation zwischen dem ersten Modem und dem zweiten Modem, Einspeisen eines Gleichtaktsignals mit einer vordefinierten Trägerfrequenz in den Phasenleiter 111, den Nullleiter 112 und den Schutzleiter 113 über den Eingang 730 zur Einspeisung eines Gleichtaktsignals der ersten Vorrichtung, und Prüfen, ob das erste Modem einen oder mehrere Träger abschaltet.

Sämtliche Messausgänge der ersten und zweiten Koppelmittel 450 und 460 und, falls vorhanden, der ersten und zweiten Koppelmittel 850 und 860 der zweiten Vorrichtung sind abgeschlossen. Der optionale Schalter 710 der Gleichtakteinspeisemittel 710 ist während dieser Messung geöffnet. Der optionale dritte Ausgang 415 der Konvertierungsmittel 410 ist, falls vorhanden, abgeschlossen.

Das erste Modem kann ein Mehrträgerübertragungsverfahren verwenden, wie beispielsweise OFDM. Das eingespeiste Gleichtaktsignal kann einen vorbestimmten Signalpegel und eine vordefinierte Bandbreite im Frequenzbereich aufweisen. Somit kann mit dem Verfahren gemäß einer dritten Ausführungsform bei Einspeisen Gleichtaktsignals mit einer vordefinierten Trägerfrequenz, und/oder Signalpegel und/oder Bandbreite, beispielsweise je nach normativer Vorgabe, überprüft werden, ob das erste Modem das Gleichtaktsignal erkennt und durch Freischalten des/der Träger der entsprechenden Frequenzen reagiert.

Ein exemplarisches Verfahren gemäß einer dritten Ausführungsform für das System 800 umfasst folgendes: Durchführen einer Kommunikation zwischen dem ersten Modem und dem zweiten Modem, Einspeisen eines Gegentaktsignals in den Ausgang 430 und/oder in den Ausgang 440 der Konvertierungsmittel 410 der ersten Vorrichtung, wobei das eingespeiste Gegentaktsignal einer vordefinierte Trägerfrequenz aufweist, und Prüfen, ob das erste Modem einen oder mehrere Träger abschaltet.

Beispielsweise kann das Gegentaktsignals in den Kommunikationsanschluss 451 der ersten Koppelmittel 450 und/oder in den Kommunikationsanschluss 462 der zweiten Koppelmittel 460 der ersten Vorrichtung eingespeist werden, so dass das eingespeiste Gegentaktsignal über die ersten bzw. Koppelmittel 450, 460 in den jeweiligen Ausgang 430 bzw. 430 der Konvertierungsmittel 410 gespeist wird. Hierfür kann das System 800 beispielsweise einen Powersplitter umfassen, welcher in die Verbindung zwischen den Kommunikationsanschlüssen 451 und 851 der ersten Koppelmittel und /oder in die Verbindung zwischen den Kommunikationsanschlüssen 461 und 861 der zweiten Koppelmittel eingeschleift wird, und welcher einen Eingang zum Einspeisen des Gegentaktsignals aufweist. Das eingespeiste Gegentaktsignal kann einen vorbestimmten Signalpegel und eine vordefinierte Bandbreite im Frequenzbereich aufweisen. Somit kann mit dem Verfahren gemäß einer dritten Ausführungsform bei Einspeisen Gegentaktsignals mit einer vordefinierten Trägerfrequenz, und/oder Signalpegel und/oder Bandbreite, beispielsweise je nach normativer Vorgabe, überprüft werden, ob das erste Modem das Gegentaktsignal erkennt und durch Freischalten des/der Träger der entsprechenden Frequenzen reagiert.

Sämtliche Messausgänge der ersten und zweiten Koppelmittel 450 und 460 und, falls vorhanden, der ersten und zweiten Koppelmittel 850 und 860 der zweiten Vorrichtung sind abgeschlossen. Der optionale Schalter 710 der optionalen Gleichtakteinspeisemittel 710 ist, falls vorhanden, während dieser Messung geschlossen. Der optionale dritte Ausgang 415 der Konvertierungsmittel 410 ist, falls vorhanden, abgeschlossen.

Generell ist der in dieser Beschreibung verwendete Begriff Anzapfung oder Mittelanzapfung in Bezug auf einer Spule oder Wicklung so verstehen, dass diese (Mittel-)Anzapfung entweder eine echte Anzapfung einer gemeinsamen Wicklung oder gemeinsamen Spule darstellt, oder die (Mittel-)Anzapfung wird durch zwei miteinander verbundenen Wicklungen oder Spulen gebildet, wobei die (Mittel-)Anzapfung am Kontaktpunkt, an welchem die beiden Spulen bzw. Wicklungen verbunden sind, abgegriffen wird. Die eine gemeinsame Wicklung oder Spule kann daher durch diese zwei verbundenen Wicklungen oder Spulen ersetzt werden. Ferner können auch die in der Beschreibung genannten Merkmale Primärwicklung und Sekundärwicklung bei der Implementierung eines Transformators vertauscht werden.

**Patentansprüche**

1.  Vorrichtung (200) zur Überprüfung des Störstrahlungsverhaltens eines Modems zur Übertragung von Daten über ein Stromversorgungsnetz, umfassend:

    - einen Netzanschluss (210) zur Zufuhr eines elektrischen Wechselstromes;
    - einen Anschluss (230), welcher mit einem Phasenleiter (111), einem Nullleiter (112) und einem Schutzleiter (113) des Netzanschlusses (110) verbunden ist und der dazu eingerichtet ist, ein Modem an den Phasenleiter (111), den Nullleiter (112) und den Schutzleiter (113) anzuschließen, wobei das Modem eingerichtet ist zur Einkopplung eines ersten Signals und eines zweiten Signals in den Anschluss für eine Ausbildung einer MIMO-Übertragung des ersten und zweiten Signals über den Phasenleiter (111), den Nullleiter (112) und den Schutzleiter (113);
    - mit dem Anschluss (230) verbundene Koppelmittel (240), welche ein asymmetrisches Impedanzstabilisierungsnetzwerk (260, 260') und einen Ausgang (245) umfassen, wobei das Impedanzstabilisierungsnetzwerk (260, 260') eingangsseitig mit dem Phasenleiter (111), dem Nullleiter (112) und dem Schutzleiter (113) verbunden ist und derart eingerichtet ist, eingangsseitig mit dem ersten und zweiten Signal gespeist zu werden, wenn das Modem an den Phasenleiter (111), den Nulleiter (112) und den Schutzleiter (113) angeschlossen wird und das erste und das zweite Signal in den Anschluss (230) einkopppelt, und wobei das asymmetrische Impedanzstabilisierungsnetzwerk (260, 260') ausgangsseitig mit dem Ausgang (245) der Koppelmittel (240) verbunden ist,

wobei das Impedanzstabilisierungsnetzwerk (260, 260') einen ersten Widerstand (241), einen zweiten Widerstand (242) und einen dritten Widerstand (243) umfasst, welche in einer Sternstruktur in Bezug auf einen gemeinsamen Knotenpunkt(246) angeordnet sind, wobei der erste Widerstand (241) mit dem Phasenleiter (111), der zweite Widerstand (242) mit dem Nullleiter (112), der dritte Widerstand (243) mit dem Schutzleiter (113) verbunden ist und der gemeinsame Knotenpunkt (246) mit dem Ausgang (245) der Koppelmittel (240) verbunden ist, und wobei das Impedanzstabilisierungsnetzwerk (260, 260') einen vierten Widerstand (244) umfasst, welcher den gemeinsamen Knotenpunkt (246) mit dem Ausgang (245) der Koppelmittel (240) verbindet.

**2.** Vorrichtung nach Anspruch 1, **dadurch gekennzeichnet, dass** das asymmetrische Impedanzstabilisierungsnetzwerk (260, 260') derart eingerichtet ist, dass der eingangsseitige LCL-Wert des Impedanzstabilisierungsnetzwerkes (260, 260') sowohl für das erste Signal als auch für das zweite Signal zwischen 6 dB und 40 dB liegt.

**3.** Vorrichtung nach Anspruch 1, **dadurch gekennzeichnet, dass** das Impedanzstabilisierungsnetzwerk (260, 260') zumindest einen weiteren Widerstand (248, 249) umfasst, dessen Wert zusammen mit dem vierten Widerstand (244) den eingangsseitigen LCL-Wert des Impedanzstabilisierungsnetzwerkes (260, 260') sowohl für das erste Signal als auch für das zweite Signal bestimmt.

**4.** System, umfassend eine Vorrichtung nach einem der vorangegangenen Ansprüche, wobei das System ein Modem umfasst, welches an den Anschluss (230) der Vorrichtung angeschlossen ist, wobei das Modem eingerichtet ist zur Einkopplung eines ersten Signals und eines zweiten Signals in den Anschluss für eine Ausbildung einer MIMO-Übertragung des ersten und zweiten Signals über den Phasenleiter (111), den Nullleiter (112) und den Schutzleiter (113), und wobei die Einkopplung des Modems in den Anschluss (230) durch eine der folgenden Einkopplungen erfolgt:

- Einkopplung des ersten Signals zwischen zwei verschiedenen Leitern aus dem Phasenleiter (111), dem Nullleiter (112) und dem Schutzleiter (113) und Einkopplung des zweiten Signals zwischen einem Potentialpunkt (155, 156), welcher zwischen dem Potential eines ersten und eines zweiten Leiters aus dem Phasenleiter (111), dem Nullleiter (112) und dem Schutzleiter (113) liegt, und dem verbleibenden Leiter aus dem Phasenleiter (111), dem Nullleiter (112) und dem Schutzleiter (113); und
- Einkopplung des ersten Signals zwischen zwei verschiedenen Leitern aus dem Phasenleiter (111), dem Nullleiter (112) und dem Schutzleiter (113) und Einkopplung des zweiten Signals zwischen zwei verschiedenen Leitern aus dem Phasenleiter (111), dem Nullleiter (112).

**5.** Verfahren zur Überprüfung des Störstrahlungsverhaltens eines Modems zur Übertragung von Daten über ein Stromversorgungsnetz unter Verwendung der Vorrichtung nach einem der Ansprüche 1 bis 3, umfassend:

- Anschließen des Modems an den Anschluss, und
- Messen eines Ausgangssignals am Ausgang der Koppelmittel.

## Claims

**1.** Apparatus(200) for checking the interference radiation behaviour of a modem for transferring data via a power supply network, comprising:

- a network connection (210) to supply an electric alternating current;
- a connection (230) connected to a phase conductor (111), a neutral conductor (112) and a protective conductor (113) of the network connection (110) and which is configured to connect a modem to the phase conductor (111), the neutral conductor (112) and the protective conductor (113), wherein the modem is configured to couple a first signal and a second signal in the connection to form a MIMO transfer of the first and second signal by means of the phase conductor (111), the neutral conductor (112) and the protective conductor (113);
- coupling means (240) connected to the connection (230) comprising an asymmetric impedance stabilisation network (260, 260') and an output (245), wherein the impedance stabilisation network (260, 260') is connected to the phase conductor (111), the neutral conductor (112) and the protective conductor (113) on the input side and configured such that the first and second signal can be fed in on the input side if the modem is connected to the phase conductor (111), the neutral conductor (112) and the protective conductor (113) and the first and the second signal are coupled in the connection (230), and wherein the asymmetric impedance stabilisation network (260, 260') is connected to the output (245) of the coupling means (240) on the output side,

wherein the impedance stabilisation network (260, 260') comprises a first resistor (241), a second resistor (242) and a third resistor (243) which are arranged in a star structure relative to a common nodal point (246), wherein the first resistor is connected to the phase conductor (111), the second resistor (242) is connected to the neutral conductor, the third resistor (243) is connected to the protective conductor (113) and the common nodal point (246) is connected to the output (245) of the coupling means (240), and
wherein the impedance stabilisation network (260, 260') comprises a fourth resistor (244) which connects the common nodal point (246) with the output (245) of the coupling means (240).

2. Apparatus according to Claim 1, **characterised in that** the asymmetric impedance stabilisation network (260, 260') is configured such that the LCL value of the impedance stabilisation network (260, 260') on the input side is between 6 dB and 40 dB both for the first signal and for the second signal.

3. Apparatus according to Claim 1, **characterised in that** the impedance stabilisation network (260, 260') comprises at least one further resistor (248, 249), the value of which combined with the fourth resistor (244) determines the LCL value of the impedance stabilisation network (260, 260') on the input side both for the first signal and for the second signal.

4. System comprising an Apparatus according to any one of the preceding claims, wherein the system comprises a modem connected to the connection (230) of the apparatus, wherein the modem is configured to couple a first signal and a second signal in the connection to generate a MIMO transfer of the first and second signal via the phase conductor (111), the neutral conductor (112) and the protective conductor (113), and wherein the coupling of the modem in the connection (230) is by means of one of the following couplings:

- coupling of the first signal between two different conductors from the phase conductor (111), the neutral conductor (112) and the protective conductor (113) and coupling of the second signal between a potential point (155, 156) which lies between the potential of a first and a second conductor from the phase conductor (111), the neutral conductor (112) and the protective conductor (113) and the remaining conductor from the phase conductor (111), the neutral conductor (112) and the protective conductor (113); and
- coupling of the first signal between two different conductors from the phase conductor (111), the neutral conductor (112) and the protective conductor (113) and coupling of the second signal between two different conductors from the phase conductor (111), the neutral conductor (112).

5. Method for checking the interference radiation behaviour of a modem for transferring data via an electricity grid using the Apparatus according to any one of claims 1 to 3, comprising:

- connecting the modem to the connection and
- measuring an output signal at the output of the coupling means.

**Revendications**

1. Dispositif (200) de contrôle du comportement en présence de rayonnements parasites d'un modem, pour la transmission de données par l'intermédiaire d'un réseau d'alimentation en courant, qui comprend:

- un raccordement au réseau (210) pour l'alimentation en courant alternatif,
- un raccordement (230), qui est relié à un conducteur de phase (111), à un conducteur de neutre (112) et à un conducteur de protection (113) du raccordement au réseau (210) et qui est aménagé pour raccorder un modem au conducteur de phase (111), au conducteur de neutre (112) et au conducteur de protection (113), sachant que le modem est conçu pour coupler, dans le raccordement, un premier signal et d'un deuxième signal pour la formation d'une transmission MIMO du premier signal et du deuxième signal, par l'intermédiaire du conducteur de phase (111), du conducteur de neutre (112) et du conducteur de protection (113),
- des moyens de couplage (240), reliés au raccordement (230), qui comprennent un réseau de stabilisation d'impédance (260, 260') asymétrique et une sortie (245), sachant que le réseau de stabilisation d'impédance (260, 260') est relié, côté entrée, au conducteur de phase (111), au conducteur de neutre (112) et au conducteur de protection (113), et est aménagé de manière à recevoir, côté entrée, le premier signal et le deuxième signal quand le modem est raccordé au conducteur de phase (111), au conducteur de neutre (112) et au conducteur de protection (113) et le premier signal et le deuxième signal sont couplés dans le raccordement (230), et sachant que le réseau de stabilisation d'impédance (260, 260') asymétrique est relié, côté sortie, à la sortie (245) des moyens de couplage (240),

sachant que le réseau de stabilisation d'impédance (260, 260') est doté d'une première résistance (241), d'une deuxième résistance (242) et d'une troisième résistance (243), qui sont disposées en étoile par rapport à un noeud commun (246), sachant que la première résistance (241) est reliée au conducteur de phase (111), la deuxième résistance (242) est reliée au conducteur de neutre (112) et la troisième résistance (243) est reliée au conducteur de protection (113) et que le noeud commun (246) est relié à la sortie (245) des moyens de couplage (240), et sachant que le réseau de stabilisation d'impédance (260, 260') est doté d'une quatrième résistance (244) qui relie le noeud commun (246) à la sortie (245) des moyens de couplage (240).

2. Dispositif selon la revendication 1, **caractérisé en ce que** le réseau de stabilisation d'impédance (260, 260') asymétrique est aménagé de manière à ce que la valeur LCL du réseau de stabilisation d'impédance (260, 260'), côté entrée, se trouve située entre 6 dB et 40 dB, aussi bien pour le premier signal que pour le deuxième signal.

3. Dispositif selon la revendication 1, **caractérisé en ce que** le réseau de stabilisation d'impédance (260, 260') est doté d'au moins une autre résistance (248, 249), dont la valeur, en commun avec la quatrième résistance (244), détermine la valeur LCL du réseau de stabilisation d'impédance (260, 260'), côté entrée, aussi bien pour le premier signal que pour le deuxième signal.

4. Système comprenant un dispositif selon l'une des revendications précédentes, sachant que le système comprend un modem, qui est relié au raccordement (230) du dispositif, sachant que le modem est aménagé pour coupler, dans le raccordement, un premier signal et un deuxième signal pour la formation d'une transmission MIMO du premier signal et du deuxième signal, par l'intermédiaire du conducteur de phase (111), du conducteur de neutre (112) et du conducteur de protection (113), et sachant que le couplage du modem dans le raccordement (230) est effectué par l'un des couplages suivants:

- couplage du premier signal entre deux différents conducteurs, provenant du groupe comprenant conducteur de phase (111), conducteur de neutre (112) et conducteur de protection (113), et couplage du deuxième signal à un point de potentiel (155, 156), qui est situé entre le potentiel d'un premier conducteur et d'un deuxième conducteur, provenant du groupe comprenant conducteur de phase (111), conducteur de neutre (112) et conducteur de protection (113), et le conducteur restant, provenant du groupe comprenant conducteur de phase (111), conducteur de neutre (112) et conducteur de protection (113), et

- couplage du premier signal entre deux conducteurs différents, provenant du groupe comprenant conducteur de phase (111), conducteur de neutre (112) et conducteur de protection (113), et couplage du deuxième signal entre deux conducteurs différents du groupe comprenant conducteur de phase (111), conducteur de neutre (112).

5. Procédé de contrôle du comportement en présence de rayonnements parasites d'un modem, pour la transmission de données par l'intermédiaire d'un réseau d'alimentation en courant, en utilisant le dispositif selon l'une des revendications 1 à 3, lequel procédé comprend :

- la liaison du modem au raccordement et
- la mesure d'un signal de sortie à la sortie des moyens de couplage.

Fig.1a

Fig.1b

Fig.1c

Fig.1d

Fig.2a

Fig.2b

Fig.3

Fig.4

Fig.5

Fig.6a

Fig.6b

Fig.7

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03040732 A2

- EP 2157704 A1

**In der Beschreibung aufgeführte Nicht-Patentliteratur**

- MIMO PLC: Theory, measurements and system set-up. **ANDREAS SCHWAGER et al.** POWER LINE COMMUNICATIONS AND ITS APPLICATIONS (ISPLC), 2011 IEEE INTERNATIONAL SYMPOSIUM ON. IEEE, 03. April 2011, 48-53